# EUROPÄISCHE PATENTSCHRIFT

(11) **EP 3 233 388 B1**
(45) Veröffentlichungstag und Bekanntmachung des Hinweises auf die Patenterteilung: **22.09.2021**
(21) Anmeldenummer: 15804112.9
(22) Anmeldetag: 02.12.2015
(51) Int. Cl.: B25H 3/00, B25H 3/02

(54) **HANDWERKZEUGKOFFER**
CASE FOR A HAND-HELD TOOL
MALLETTE POUR OUTIL À MAIN

(30) Priorität: 17.12.2014 DE 102014226234
(43) Veröffentlichungstag der Anmeldung: 25.10.2017
(73) Patentinhaber: Robert Bosch GmbH, 70442 Stuttgart (DE)
(72) Erfinder: BEUTEL, Hansjoerg, 72793 Pfullingen (DE); VETTER, Joerg, 71638 Ludwigsburg (DE); LUGINSLAND, Juergen, 71111 Waldenbuch (DE); BREITENBACH, Jan, 70569 Stuttgart (DE); BAUMGARTNER, Josef, 72218 Wildberg (DE); POZSEGA, Peter, 7400 Kaposvar (HU)
(86) Internationale Anmeldenummer: PCT/EP2015/078286
(87) Internationale Veröffentlichungsnummer: WO 2016/096414

(56) Entgegenhaltungen:
- EP-A2- 2 540 453
- DE-A1-102011 086 799
- DE-A1-102011 086 874
- DE-A1-102012 111 328
- DE-U1-202007 018 372

## Beschreibung

### Stand der Technik

Es ist bereits ein Handwerkzeugkoffer mit zumindest einer Grundeinheit, die zumindest eine Seitenwand umfasst, und mit zumindest einer Deckeleinheit, die dazu vorgesehen ist, mit der Grundeinheit einen Kofferinnenraum zu einer Lagerung und/oder zu einem Transport von zumindest einem Transportgegenstand mittelbar oder unmittelbar zu begrenzen, vorgeschlagen worden, siehe EP 2 540 453 A2, DE 10 2011 086874 A1, DE 10 2011 086799 A1, DE 20 2007 018372 U1, und DE 10 2012 111328 A1.

### Offenbarung der Erfindung

Die Erfindung geht aus von einem Handwerkzeugkoffer nach Anspruch 1. Dadurch kann ein Handwerkzeugkoffer bereitgestellt werden zu einer besonders präzisen Positionierung des Transportgegenstands. Es kann eine hohe Effizienz für eine drahtlose Energieübertragung auf den Transportgegenstand erreicht werden. Es kann eine konstruktiv einfache Positioniereinheit zur Positionierung des Transportgegenstands bereitgestellt werden. Dem Benutzer kann besonders zuverlässig eine erfolgreiche Anordnung des Transportgegenstands in einer vorbestimmten Position angezeigt werden. Unter einem "Handwerkzeugkoffer" soll in diesem Zusammenhang insbesondere ein von Hand tragbarer Koffer verstanden werden, der dazu vorgesehen ist, den in dem Kofferinnenraum gelagerten Transportgegenstand oder eine Mehrzahl von Transportgegenständen vor Staub, Feuchtigkeit, mechanischer Einwirkung und/oder weiteren Umwelteinflüssen zu schützen. Vorzugsweise bilden die Grundeinheit und/oder die Deckeleinheit eine Hülle aus, die in einem geschlossenen Zustand des Handwerkzeugkoffers den Kofferinnenraum umschließt. Es ist denkbar, dass der Koffer eine mit der Grundeinheit und/oder mit der Deckeleinheit verbundene Zwischeneinheit umfasst, die den Kofferinnenraum begrenzt. Es ist denkbar, dass der Handwerkzeugkoffer jeweils eine Mehrzahl von Grundeinheiten und/oder Deckeleinheiten umfasst. Es ist ebenso denkbar, dass der Handwerkzeugkoffer genau eine Grundeinheit und genau eine Deckeleinheit umfasst. Der Handwerkzeugkoffer ist dazu vorgesehen, den Transportgegenstand zu einer drahtlosen Energieübertragung in den Transportgegenstand zu lagern. Bevorzugt ist der Handwerkzeugkoffer dazu vorgesehen, in eine Haltevorrichtung eingesetzt zu werden, die dazu vorgesehen ist, Energie für die drahtlose Energieübertragung bereitzustellen. Vorzugsweise ist die Haltevorrichtung zu einer Montage an einer Gebäudewand, an einer Fahrzeugwand, an einem Gestell oder in einem Regal vorgesehen. Unter einer "drahtlosen Energieübertragung" soll in diesem Zusammenhang insbesondere eine induktive Energieübertragung zum Laden einer Energiespeichereinheit verstanden werden. Unter einem "Transportgegenstand" soll in diesem Zusammenhang insbesondere ein aus dem Handwerkzeugkoffer zu einem Einsatz entnehmbarer Gegenstand verstanden werden, vorzugsweise eine Handwerkzeugmaschine, eine Akkuvorrichtung einer Handwerkzeugmaschine, eine Ladevorrichtung für eine Handwerkzeugmaschine oder ein anderes Zubehörteil. Vorzugsweise ist der Transportgegenstand zu einer drahtlosen Energieaufnahme vorgesehen. Vorzugsweise ist der Handwerkzeugkoffer zu einer Lagerung und/oder einem Transport von zumindest zwei Transportgegenständen vorgesehen, die zu einer drahtlosen Energieaufnahme vorgesehen sind. Unter einer "Handwerkzeugmaschine" soll in diesem Zusammenhang insbesondere eine tragbare Maschine verstanden werden, die zumindest eine elektrische Antriebseinheit aufweist, beispielsweise eine Bohrmaschine, ein Bohr- und/oder Schlaghammer, eine Säge, ein Hobel, ein Schrauber, eine Fräse, ein Schleifer, ein Winkelschleifer, ein Gartengerät, wie z.B. eine Heckenschere, und/oder ein Multifunktionswerkzeug. Unter einer "Akkuvorrichtung" soll in diesem Zusammenhang insbesondere eine Vorrichtung verstanden werden, die dazu vorgesehen ist, elektrische Energie insbesondere für die elektrische Antriebseinheit der Handwerkzeugmaschine bereitzustellen. Vorzugsweise umfasst die Akkuvorrichtung zumindest eine ladbare elektrische Energiespeichereinheit, die beispielsweise eine elektrochemische Zelle aufweist. Vorzugsweise ist die Akkuvorrichtung zu einer mechanischen und elektrischen, lösbaren Kopplung mit einer Handwerkzeugmaschine vorgesehen. Es ist auch denkbar, dass die Akkuvorrichtung fest mit einer Handwerkzeugmaschine verbunden ist. Vorzugsweise ist die Deckeleinheit zumindest im Wesentlichen eben ausgebildet und/oder weist einen zumindest im Wesentlichen in einer Schließebene angeordneten Schließrand auf, der zu einem Kontakt mit der Grundeinheit vorgesehen ist. Unter einer "Seitenwand" soll in diesem Zusammenhang insbesondere eine Wand verstanden werden, die zumindest in einem geschlossenen Zustand der Deckeleinheit zumindest im Wesentlichen senkrecht zu der Deckeleinheit und/oder zu einer von dem Schließrand der Deckeleinheit festgelegten Schließebene angeordnet ist. Vorzugsweise begrenzt die Seitenwand den Kofferinnenraum. Unter "zumindest im Wesentlichen senkrecht" soll in diesem Zusammenhang insbesondere verstanden werden, dass die Seitenwand und die Deckeleinheit und/oder die Schließebene einen Winkel einschließen, der um weniger als 60 Grad, vorzugsweise um weniger als 30 Grad, bevorzugt um weniger als 10 Grad und besonders bevorzugt um weniger als 5 Grad von 90 Grad abweicht. Unter einer "Schließbewegung" soll in diesem Zusammenhang insbesondere eine Relativbewegung der Deckeleinheit zu der Grundeinheit verstanden werden, welche die Deckeleinheit von einem offenen Zustand in einen geschlossenen Zustand überführt, in dem die Deckeleinheit und die Grundeinheit den Kofferinnenraum mittelbar oder unmittelbar begrenzen. Die Schließbewegung kann eine Schwenkbewegung, eine Aufsetzbewegung oder eine Schiebebewegung sein, d.h. sie kann eine Drehung und/oder eine lineare Bewegung umfassen. Unter einer "Schließkraft" soll in diesem Zusammenhang insbesondere eine Kraft verstanden werden, welche die Schließbewegung bewirkt und/oder die Deckeleinheit gegenüber der Grundeinheit in einem geschlossenen Zustand hält. Vorzugsweise wird die Schließkraft von einem Benutzer aufgebracht und/oder von einer Schließeinheit bereitgestellt, welche die Deckeleinheit und die Grundeinheit in dem geschlossenen Zustand vorzugsweise form- und/oder kraftschlüssig miteinander verbindet. Unter einer "Positionierkraft" soll in diesem Zusammenhang insbesondere eine Kraft verstanden werden, die auf den zumindest einen Transportgegenstand zumindest in einem geschlossenen Zustand der Deckeleinheit einwirkt und die den zumindest einen Transportgegenstand relativ zu der Grundeinheit, insbesondere relativ zu der Seitenwand bewegt und/oder in einer Position relativ zu der Grundeinheit, insbesondere relativ zu der Seitenwand hält. Unter einer "wesentlichen Komponente" in Richtung der Seitenwand soll in diesem Zusammenhang eine zuverlässig auftretende Komponente, d.h. insbesondere im Gegensatz zu einer zufällig auftretenden Komponente, verstanden werden. Vorzugsweise reicht die Komponente dazu aus, den zumindest einen Transportgegenstand in Richtung der Seitenwand zu verschieben. Vorteilhaft weicht ein Betrag der Komponente um weniger als 75 Prozent, vorzugsweise um weniger als 50 Prozent, bevorzugt um weniger als 25 Prozent und besonders bevorzugt um weniger als 10 Prozent von einem Gesamtbetrag der Positionierkraft ab. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Die Positionierkraft weist zumindest eine wesentlich Komponente in Richtung einer vorbestimmten Ladeposition des zumindest einen Transportgegenstands auf. Dadurch kann ein Handwerkzeugkoffer mit Ladeposition bereitgestellt werden, in welcher der Transportgegenstand besonders effizient Energie aufnehmen kann. Dadurch kann eine für eine Energieübertragung bereitgestellte Energiemenge besonders gering gehalten werden. Es kann ein für einen Ladevorgang in einem Kraftfahrzeug erforderliches Effizienzniveau erreicht werden. Es kann ein besonders kurzer Ladevorgang erreicht werden. Es kann ein hoher Benutzerkomfort erreicht werden. Vorzugsweise bewegt die Positionierkraft in zumindest einem Betriebszustand den zumindest einen Transportgegenstand bei der Schließbewegung in die vorbestimmte Ladeposition oder hält den Transportgegenstand in der vorbestimmten Ladeposition. Unter einer "vorbestimmten Ladeposition" soll in diesem Zusammenhang insbesondere eine vorbestimmte Position des zumindest einen Transportgegenstands in dem Kofferinnern verstanden werden, in welcher der Transportgegenstand für einen Ladevorgang optimiert angeordnet ist. Vorzugsweise ist in der vorbestimmten Ladeposition eine Anordnung relativ zu der Seitenwand festgelegt. Bevorzugt ist in der vorbestimmten Ladeposition ein Abstand zwischen dem zumindest einen Transportgegenstand und der Seitenwand festgelegt. Vorzugsweise ist der Transportgegenstand in der Ladeposition nahe an der Seitenwand angeordnet. Vorzugsweise ist der Transportgegenstand dazu vorgesehen, in der vorbestimmten Ladeposition mittels drahtloser Energieübertragung Energie aufzunehmen und/oder geladen zu werden. Vorzugsweise beträgt ein Abstand zwischen dem Transportgegenstand in der Ladeposition und der Seitenwand weniger als 2 mm, bevorzugt weniger als 1 mm und besonders bevorzugt um weniger als 0,5 mm. Vorteilhaft ist der Transportgegenstand in der vorbestimmten Ladeposition mit der Seitenwand in Kontakt. Vorzugsweise weist der Transportgegenstand eine Ladeseite auf, die dazu vorgesehen ist, in der vorbestimmten Ladeposition mit der Seitenwand in Kontakt zu sein.

Der Handwerkzeugkoffer umfasst eine Positioniereinheit, die dazu vorgesehen ist, den Transportgegenstand an die Seitenwand anzunähern und/oder relativ zu der Seitenwand auszurichten. Dadurch kann eine Effizienz der drahtlosen Energieübertragung weiter gesteigert werden. Ein Volumen des Kofferinnenraums kann besonders effizient genutzt werden. Vorzugsweise sind die Positioniereinheit, die dazu vorgesehen ist, den Transportgegenstand an die Seitenwand anzunähern und/oder relativ zu der Seitenwand auszurichten, und die Positioniereinheit, die in zumindest einem Betriebszustand bei einer Schließbewegung zwischen der Grundeinheit und der Deckeleinheit eine Schließkraft in eine Positionierkraft auf den zumindest einen Transportgegenstand übersetzt, die zumindest eine wesentliche Komponente in Richtung der Seitenwand aufweist, vollständig einstückig ausgebildet. Alternativ kann der Handwerkzeugkoffer auch zwei, voneinander zumindest teilweise getrennt ausgeführte Positioniereinheiten aufweisen. Vorzugsweise ist die Positionierkraft dazu vorgesehen, den zumindest einen Transportgegenstand in Richtung der Seitenwand zu bewegen und einen Abstand zwischen dem Transportgegenstand und der Seitenwand zu verkleinern. Unter "ausrichten" soll in diesem Zusammenhang insbesondere verstanden werden, dass die Positioniereinheit dazu vorgesehen ist, den zumindest einen Transportgegenstand relativ zu der Seitenwand zu drehen. Vorzugsweise weist der Transportgegenstand eine ebene Ladeseite auf, welche die Positioniereinheit in zumindest einem Betriebszustand parallel zu der Seitenwand ausrichtet. Vorzugsweise weist der Transportgegenstand zumindest eine Sekundärspule auf und die Positioniereinheit ist dazu vorgesehen, eine Achse der Sekundärspule zu einem Ladevorgang parallel und/oder fluchtend zu einer Achse einer Primärspule auszurichten, die außerhalb der Seitenwand angeordnet ist.

Ferner wird vorgeschlagen, dass die Positioniereinheit in zumindest einem Betriebszustand bei einer Schließbewegung zwischen der Grundeinheit und der Deckeleinheit eine Schließkraft in eine Klemmkraft auf den zumindest einen Transportgegenstand übersetzt, die zumindest eine wesentliche Komponente in Richtung der Seitenwand aufweist. Dadurch kann der zumindest eine Transportgegenstand besonders zuverlässig und sicher in dem Kofferinnenraum gelagert werden. Eine Wahrscheinlichkeit für eine ungünstige Anordnung des Transportgegenstands kann gering gehalten werden. Unter einer "Klemmkraft" soll in diesem Zusammenhang insbesondere eine Kraft aufgrund einer Keilwirkung und/oder aufgrund einer elastischen Verformung verstanden werden. Vorzugsweise ist die Klemmkraft dazu vorgesehen, den zumindest einen Transportgegenstand gegen die Seitenwand zu drücken.

In einer vorteilhaften Ausgestaltung weist die Positioniereinheit zumindest eine Wirkfläche auf, die dazu vorgesehen ist, mit einer korrespondierenden Wirkfläche des zumindest einen Transportgegenstands zusammenzuwirken und die eine Flächennormale mit einer Komponente in Richtung der Seitenwand aufweist. Dadurch kann konstruktiv einfach eine Positionierkraft mit einer wesentlichen Komponente in Richtung der Seitenwand erzeugt werden. Vorzugsweise sind die zumindest eine Wirkfläche der Positioniereinheit und die korrespondierende Wirkfläche des zumindest einen Transportgegenstandes zumindest in einem geschlossenen Zustand der Deckeleinheit zumindest im Wesentlichen parallel zueinander ausgerichtet. Vorzugsweise sind die Wirkflächen dazu vorgesehen, aneinander vorbei zu gleiten. Vorzugsweise weisen die Wirkflächen eine glatte Oberfläche auf. Vorzugsweise sind die zumindest eine Wirkfläche der Positioniereinheit und die Wirkfläche des zumindest einen Transportgegenstands in einem eingesetzten Zustand des Transportgegenstands in den Koffer miteinander in Kontakt. Es ist auch denkbar, dass der Handwerkzeugkoffer in einem eingesetzten Zustand des Transportgegenstands ein Spiel zwischen der zumindest einen Wirkfläche der Positioniereinheit und die Wirkfläche des zumindest einen Transportgegenstands aufweist. Vorzugsweise beträgt das Spiel weniger als 1 mm, bevorzugt weniger als 0,5 mm und besonders bevorzugt weniger als 0,1 mm. Vorzugsweise schließen die Flächennormale der Wirkfläche der Positioniereinheit und die Flächennormale der Seitenwand einen Winkel größer als 120 Grad, bevorzugt größer als 140 Grad und besonders bevorzugt größer als 160 Grad ein. Vorzugsweise bildet die Positioniereinheit zusammen mit dem zumindest einen Transportgegenstand einen Keiltrieb aus. Unter einem "Keiltrieb" soll in diesem Zusammenhang insbesondere eine Vorrichtung verstanden werden, die zumindest zwei zueinander beweglich gelagerte Elemente mit jeweils einer Gleitstelle aufweist, und die mittels einer Gleitbewegung der Elemente gegeneinander eine zumindest im Wesentliche geradlinige Bewegung eines ersten der Elemente in eine zumindest im Wesentlichen geradlinige Bewegung eines weiteren der Elemente übersetzt, die mit der Bewegung des ersten der Elemente einen von null verschiedenen Winkel einschließt.

In vorteilhafter Weise ist die zumindest eine Wirkfläche als eine Schrägfläche ausgebildet. Dadurch kann konstruktiv einfach eine Keilwirkung und eine damit verbundene Klemmkraft erzielt werden. Unter einer "Schrägfläche" soll in diesem Zusammenhang insbesondere eine Fläche verstanden werden, die weder senkrecht noch parallel zu der Deckeleinheit und/oder zu einer von einem Schließrand der Deckeleinheit festgelegten Schließebene angeordnet ist. Vorzugsweise schließen die Schrägfläche und die Deckeleinheit und/oder die Schließebene einen Winkel ein, der weniger als 40 Grad, bevorzugt weniger als 20 Grad und besonders bevorzugt weniger als 10 Grad von 45 Grad abweicht.

In einer vorteilhaften Ausgestaltung umfasst der Handwerkzeugkoffer eine Lagereinheit auf, die eine Schwenkachse aufweist, um welche sie die Deckeleinheit und die Grundeinheit für die Schließbewegung schwenkbar gegeneinander lagert. Dadurch kann eine besonders komfortable Schließbewegung erreicht werden. Der Transportgegenstand kann vorteilhaft über eine Hebelwirkung positioniert werden. Vorzugsweise ist die zumindest eine Wirkfläche parallel zu der Schwenkachse angeordnet. Unter "schwenkbar" soll in diesem Zusammenhang insbesondere über einen begrenzten Winkelbereich drehbar verstanden werden. Vorzugsweise ist die Schwenkachse in einem Randbereich der Deckeleinheit und/oder in einem Randbereich der Grundeinheit angeordnet. Vorzugsweise ist die Schwenkachse zumindest im Wesentlichen parallel zu der Seitenwand angeordnet. Es ist auch denkbar, dass die Schwenkachse zumindest im Wesentlichen senkrecht zu der Seitenwand angeordnet ist. Unter "zumindest im Wesentlichen senkrecht" soll in diesem Zusammenhang insbesondere einen Winkel einschließend verstanden werden, der weniger als 10 Grad, bevorzugt weniger als 7 Grad und besonders bevorzugt um weniger als 2 Grad von 90 Grad abweicht.

Ferner wird vorgeschlagen, dass die Positionierkraft eine wesentliche, in radialer Richtung zu der Schwenkachse ausgerichtete Komponente aufweist. Dadurch kann eine konstruktiv einfache Positioniereinheit bereitgestellt werden. Eine Schließbewegung der Deckeleinheit kann besonders wirkungsvoll für eine Positionierung des zumindest einen Transportgegenstands genutzt werden. Vorzugsweise ist die Komponente der Positionierkraft in Richtung auf die Schwenkachse hin orientiert. Es ist denkbar, dass die Positionierkraft in Richtung von der Schwenkachse weg orientiert ist. Es ist auch denkbar, dass die Positionierkraft eine wesentliche Komponente aufweist, die parallel zu der Schwenkachse ausgerichtet ist.

Ferner wird vorgeschlagen, dass die Positioniereinheit zumindest ein Positioniermittel aufweist, das in einem montierten Zustand an die Deckeleinheit angebunden ist. Dadurch kann eine Positioniereinheit bereitgestellt werden, die dazu vorgesehen ist, eine Schließkraft bei einer Schließbewegung der Deckeleinheit direkt in eine Positionierkraft auf den zumindest einen Transportgegenstand zu übersetzen. Unter "angebunden" soll in diesem Zusammenhang insbesondere kinematisch gekoppelt, vorzugsweise fest verbunden und/oder einstückig ausgebildet verstanden werden. Vorzugsweise sind das Positioniermittel und die Deckeleinheit als zwei einzelne Teile ausgebildet. Es ist denkbar, dass das Positioniermittel dazu vorgesehen ist, insbesondere bei einer Montage und/oder bei einer Konfigurierung in verschiedenen Positionen mit der Deckeleinheit verbunden zu werden, d.h. beispielsweise verschraubt, verstiftet, verrastet, gesteckt und/oder geklebt oder auf eine andere dem Fachmann geeignet erscheinende Weise verbunden zu werden.

In einer vorteilhaften Ausgestaltung weist das zumindest eine Positioniermittel zumindest eine Aussparung zur Aufnahme eines Gegenstands auf. Dadurch kann eine besonders vielseitig nutzbare Positioniereinheit bereitgestellt werden. Der Kofferinnenraum kann besonders vorteilhaft genutzt werden. Unter einem "Gegenstand zur Aufbewahrung" in dem Positioniermittel soll in diesem Zusammenhang insbesondere ein im Zusammenhang mit einer Handwerkzeugmaschine einsetzbares Element verstanden werden, beispielsweise ein Halteelement, wie eine Gürteleinhängelasche, oder Einsatzwerkzeuge, Messmittel, Anleitungen und/oder Dokumentationsmittel.

Ferner wird vorgeschlagen, dass das zumindest eine Positioniermittel als eine Leiste ausgebildet ist. Dadurch kann eine konstruktiv einfach ausgestaltete Positioniereinheit bereitgestellt werden. Es kann auf konstruktiv einfache Weise ein Handwerkzeugkoffer für eine besonders effiziente drahtlose Energieübertragung bereitgestellt werden. Es kann ein besonders kostengünstiger Handwerkzeugkoffer bereitgestellt werden. Es kann konstruktiv einfach ein Positioniermittel bereitgestellt werden, das dazu vorgesehen ist, die Schließkraft in eine Positionierkraft auf zumindest zwei Transportgegenstände zu übersetzen. Unter einer "Leiste" soll in diesem Zusammenhang insbesondere ein längliches zumindest im Wesentlichen prismenförmiges Element verstanden werden. Vorzugsweise weist die Leiste eine Länge, eine Höhe und eine Breite auf und die Länge beträgt zumindest das Dreifache, vorzugsweise zumindest das Vierfache und bevorzugt zumindest das Fünffache der Breite und/oder Höhe. Die Breite und die Höhe weichen vorzugsweise um weniger als einen Faktor drei voneinander ab. Vorzugsweise weist das Positioniermittel zumindest zwei Wirkflächen auf, die jeweils dazu vorgesehen sind, mit korrespondierenden Wirkflächen von zumindest zwei Transportgegenständen zusammenzuwirken.

In einer vorteilhaften Ausgestaltung weist die Positioniereinheit zumindest ein Positioniermittel auf, das in einem montierten Zustand an die Grundeinheit angebunden ist. Dadurch kann eine Positioniereinheit bereitgestellt werden, die in vorteilhafter Weise eine Schwerkraft in die Positionierkraft übersetzt. Vorzugsweise ist die an die Grundeinheit angebundene Positioniereinheit als eine Koffereinlage ausgebildet und liegt in einem montierten Zustand an einer der Deckeleinheit in einem geschlossenen Zustand gegenüberliegenden Bodenwand an. Vorzugsweise ist die Positioniereinheit mit der Bodenwand verbunden. Es ist aber auch denkbar, dass die Positioniereinheit mit der Seitenwand und/oder mit einer weiteren Seitenwand der Grundeinheit verbunden ist. Vorzugsweise ist die Positioniereinheit stoffschlüssig, formschlüssig oder kraftschlüssig mit der Grundeinheit verbunden.

Ferner wird vorgeschlagen, dass die Positioniereinheit zumindest ein Anzeigemittel aufweist, das dazu vorgesehen ist, einem Benutzer eine vorbestimmte Lagerposition des zumindest einen Transportgegenstands anzuzeigen. Dadurch kann ein Benutzer besonders einfach die vorbestimmte Lagerposition erkennen. Es kann ein hoher Bedienkomfort beim Einlegen des zumindest einen Transportgegenstands in den Handwerkzeugkoffer erreicht werden. Es kann in vorteilhafter Weise eine ungünstige und/oder ungeeignete Anordnung des zumindest einen Transportgegenstands in dem Kofferinnern vermieden werden. Es kann eine besonders zuverlässige Lagerung und/oder Transport erreicht werden. Vorzugsweise weist das Anzeigemittel eine Oberflächenform einer Aufnahme für den zumindest einen Transportgegenstand auf. Bevorzugt entspricht die Oberflächenform der Aufnahme zumindest einem Bereich einer Form des zumindest einen Transportgegenstands. Vorzugsweise ist die Aufnahme zu einer Lagerung des zumindest einen Transportgegenstands in zumindest zwei verschiedenen Orientierungen vorgesehen, die bevorzugt durch eine Drehung um 180 Grad ineinander übergehen. Es ist auch denkbar, dass das Anzeigemittel als eine Beschriftung, ein Bild, ein Symbol oder als ein anderes dem Fachmann geeignet erscheinendes Hinweiszeichen ausgebildet ist. Unter einer vorbestimmten "Lagerposition" soll in diesem Zusammenhang eine Position des zumindest einen Transportgegenstands in dem Kofferinnern verstanden werden, die in Bezug auf eine Raumausnutzung und/oder in Bezug auf einen Energieübertragungsvorgang und/oder in Bezug auf eine weitere Größe optimiert ist. Für einen Transportgegenstand, der für eine drahtlose Energieaufnahme vorgesehen ist, entspricht die vorbestimmte Lagerposition vorzugsweise der vorbestimmten Ladeposition.

In vorteilhafter Weise umfasst der Handwerkzeugkoffer eine zumindest teilweise einstellbare Koffereinlage, die zu einer Lagerung einer Handwerkzeugmaschine vorgesehen ist. Dadurch kann ein auf verschiedene Typen von Transportgegenständen einstellbarer Handwerkzeugkoffer bereitgestellt werden. Es kann ein auf verschiedene Typen von Handwerkzeugmaschinen einstellbarer Handwerkzeugkoffer bereitgestellt werden. Es kann ein besonders flexibel einsetzbarer Handwerkzeugkoffer bereitgestellt werden. Unter "einstellbar" soll in diesem Zusammenhang insbesondere in verschiedenen Positionen in dem Kofferinnern fixierbar, vorzugsweise in verschiedenen Positionen relativ zu der Seitenwand fixierbar verstanden werden. Vorzugsweise gehen die Positionen durch Verschiebung senkrecht zu der Seitenwand und/oder parallel zu einer Bodenwand der Grundeinheit ineinander über. Vorzugsweise ist die Koffereinlage auf eine Mehrzahl diskreter Positionen in dem Kofferinnern einstellbar. Es ist auch denkbar, dass der Handwerkzeugkoffer eine Führungseinheit, insbesondere eine Linearführungseinheit, aufweist, die zu einer stufenlosen Einstellung der Position der Koffereinlage vorgesehen ist. Vorzugsweise ist die Koffereinlage formschlüssig in zumindest einer Richtung parallel zu der Bodenwand mit der Grundeinheit verbindbar. Es ist auch denkbar, dass die Koffereinlage mittels einer Rastverbindung oder einer Klettverbindung oder einer anderen dem Fachmann geeignet erscheinenden Verbindung mit der Grundeinheit verbindbar ist. Unter verschiedenen "Typen" von Transportgegenständen sollen in diesem Zusammenhang insbesondere verschiedene Typen von Akkuvorrichtungen und/oder Handwerkzeugmaschinen verstanden werden. Vorzugsweise weisen verschiedene Typen eine unterschiedliche Abmessung in zumindest einer Richtung auf. Bevorzugt weisen die verschiedenen Typen einen unterschiedlichen Einsatzzweck und/oder zumindest einen unterschiedlichen Leistungsparameter, wie beispielsweise eine Kapazität, eine Ausgangsleistung und/oder eine Ladegeschwindigkeit auf.

Ferner wird eine Positioniereinheit eines erfindungsgemäßen Handwerkzeugkoffers vorgeschlagen. Dadurch kann eine Positioniereinheit zu einer besonders präzisen Positionierung des zumindest einen Transportgegenstands bereitgestellt werden. Es kann eine hohe Effizienz für eine drahtlose Energieübertragung auf den Transportgegenstand erreicht werden. Unter einer "Positioniereinheit" soll in diesem Zusammenhang insbesondere eine Einheit verstanden werden, die dazu vorgesehen ist, den zumindest einen Transportgegenstand in Abhängigkeit von einer Ausgangsposition des Transportgegenstands, in eine vorzugsweise vorbestimmte Lagerposition zu bringen und/oder in der Lagerposition zu halten.

Ferner wird ein System mit einem erfindungsgemäßen Handwerkzeugkoffer nach einem der Ansprüche vorgeschlagen mit zumindest einem Transportgegenstand, der zu einer Lagerung und/oder zu einem Transport in dem Handwerkzeugkoffer vorgesehen ist. Dadurch kann ein System zu einer besonders zuverlässigen Lagerung des Transportgegenstands bereitgestellt werden. Vorzugsweise ist das System koppelbar mit einer Haltevorrichtung für den Handwerkzeugkoffer ausgebildet, die dazu vorgesehen ist, eine Energie für eine drahtlose Energieübertragung in den Handwerkzeugkoffer bereitzustellen.

In vorteilhafter Weise ist der zumindest eine Transportgegenstand als eine Ackuvorrichtung zu einer Energieversorgung einer Handwerkzeugmaschine ausgebildet ist. Dadurch kann ein besonders effizienter Ladevorgang bei einer Lagerung der Akkuvorrichtung in dem Handwerkzeugkoffer erreicht werden. Vorzugsweise ist die Akkuvorrichtung zu einem Ladeprozess mittels einer drahtlosen elektrischen Energieübertragung vorgesehen. Es kann ein besonders geringer Energieaufwand zum Laden der Akkuvorrichtung erreicht werden.

In einer vorteilhaften Ausgestaltung umfasst das System eine Handwerkzeugmaschine, die dazu vorgesehen ist, zumindest mechanisch an die Akkuvorrichtung gekoppelt in dem Handwerkzeugkoffer transportiert und/oder gelagert zu werden. Dadurch kann eine komfortable Handhabung der Handwerkzeugmaschine erreicht werden. Es kann ein besonders vielseitig einsetzbares System bereitgestellt werden. Die Akkuvorrichtung kann bei einer Lagerung in dem Handwerkzeugkoffer geladen werden, wodurch eine hohe Verfügbarkeit des Systems erreicht werden kann.

Ferner wird ein Verfahren mit einem erfindungsgemäßen System, bei dem bei der Schließbewegung die Schließkraft in die Positionierkraft übersetzt wird. Dadurch kann auf eine für einen Benutzer besonders komfortable Weise der zumindest eine Transportgegenstand für eine Lagerung, einen Transport und/oder einen Ladevorgang positioniert werden. Der Transportgegenstand kann auf eine einfache und überprüfbare Weise in eine vorbestimmte Ladeposition für einen optimierten Ladevorgang gebracht werden.

Das erfindungsgemäße System und der erfindungsgemäße Handwerkzeugkoffer sollen hierbei nicht auf die oben beschriebene Anwendung und Ausführungsform beschränkt sein. Insbesondere kann der erfindungsgemäße Handwerkzeugkoffer zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In den Zeichnungen ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes System mit einem Handwerkzeugkoffer und einer Mehrzahl von Transportgegenständen in einer perspektivischen Ansicht,
- Fig. 2: das System mit einer Koffereinlage,
- Fig. 3: das System mit der Koffereinlage in einer zweiten Einlegeposition und mit zwei weiteren Transportgegenständen,
- Fig. 4: den Handwerkzeugkoffer in einem geschlossenen Zustand einer Deckeleinheit in einem perspektivischen Schnitt senkrecht zu einer Länge des Handwerkzeugkoffers,
- Fig. 5: den Handwerkzeugkoffer mit der Koffereinlage in der zweiten Einlegeposition,
- Fig. 6: das System in einem Schnitt senkrecht zu der Länge des Handwerkzeugkoffers mit einer Handwerkzeugmaschine und einer Akkuvorrichtung,
- Fig. 7: eine Detailansicht des Schnitts senkrecht zu der Länge des Handwerkzeugkoffers und
- Fig. 8: einen Schnitt durch ein weiteres Ausführungsbeispiel des Handwerkzeugkoffers mit einer Aufnahme für eine Auswölbung der Akkuvorrichtung.

### Beschreibung der Ausführungsbeispiele

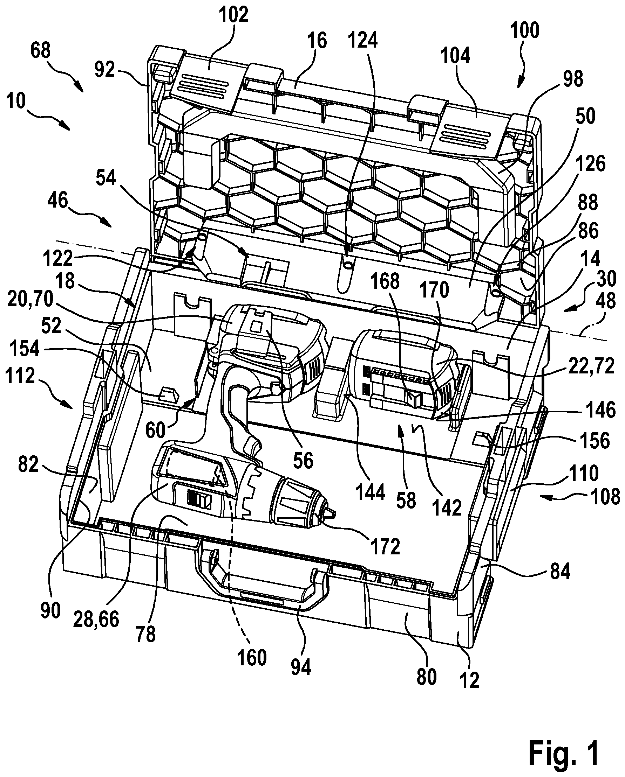

Figur 1 zeigt ein System 68 mit einem Handwerkzeugkoffer 10 und einer Mehrzahl von Transportgegenständen 20, 22, 24, 26, 28, die zu einer Lagerung und/oder zu einem Transport in dem Handwerkzeugkoffer 10 vorgesehen sind. Der Handwerkzeugkoffer 10 umfasst eine Grundeinheit 12, die als eine Bodeneinheit ausgebildet ist. Die Grundeinheit 12 ist in Form eines offenen Quaders ausgebildet und weist eine Bodenwand 78 und vier im Wesentlichen senkrecht zu der Bodenwand 78 angeordnete Seitenwände 14, 80, 82, 84 auf. Der Handwerkzeugkoffer 10 umfasst ferner eine Deckeleinheit 16, die dazu vorgesehen ist, mit der Grundeinheit 12 einen Kofferinnenraum 18 zu einer Lagerung und/oder zu einem Transport der Transportgegenstände 20, 22, 24, 26, 28 unmittelbar zu begrenzen. In dem vorliegenden Ausführungsbeispiel ist die Deckeleinheit 16 im Wesentlichen flach ausgebildet. Die Deckeleinheit 16 weist eine Deckelwand 86 und ein hexagonales Wabengitter 88 auf, das dazu vorgesehen ist, die Deckeleinheit 16 zu versteifen. In einem geschlossenen Zustand ist das Wabengitter 88 dem Kofferinnenraum 18 zugewandt. Die Grundeinheit 12 weist an den vier Seitenwänden 14, 80, 82, 84 einen Schließrand 90 auf und die Deckeleinheit 16 weist einen Schließrand 92 auf. Der Schließrand 90 der Grundeinheit 12 und der Schließrand 92 der Deckeleinheit 16 sind in einem geschlossenen Zustand des Handwerkzeugkoffers 10 miteinander in Kontakt und schließen den Kofferinnenraum 18 staubdicht und/oder feuchtigkeitsdicht ab. Die Grundeinheit 12 und die Deckeleinheit 16 sind in dem vorliegenden Ausführungsbeispiel aus einem gleichen bruchfesten Material ausgebildet. Die Grundeinheit 12 und die Deckeleinheit 16 sind aus einem Kunststoff ausgebildet. Der Handwerkzeugkoffer 10 weist eine Breite, eine Tiefe und eine Höhe auf.

Der Handwerkzeugkoffer 10 umfasst zwei Griffe 94, 96. Ein erster der Griffe 94 ist als ein Bügel ausgebildet und an einer der Seitenwände 80 der Grundeinheit 12 angeordnet. Der Griff 94 weist zwei Bügelenden auf. Der Griff 94 ist schwenkbar mittels der Bügelenden an der Seitenwand 80 gelagert. Der Griff 94 weist eine Ruheposition auf, in der eine Griffebene parallel zu der Seitenwand 80 angeordnet ist. Der Griff 94 weist eine Trageposition auf, in der die Griffebene zumindest im Wesentlichen senkrecht zu der Seitenwand 80 angeordnet ist. Der Griff 94 weist in dem vorliegenden Ausführungsbeispiel eine Längserstreckung auf, die etwa einem Drittel der Breite des Handwerkzeugkoffers 10 entspricht. Ein zweiter der Griffe 96 ist an einer Grundeinheit 12 abgewandten Außenfläche der Deckeleinheit 16 angeordnet. Die Deckeleinheit 16 weist eine muldenförmige Aufnahme 98 auf, die dazu vorgesehen ist, den Griff 94 in einer Ruheposition aufzunehmen. Der Griff 96 ist bügelförmig ausgebildet und weist zwei Bügelenden auf. Der Griff 96 ist mittels der Bügelenden schwenkbar an der Deckeleinheit 16 gelagert. Der Griff 96 weist eine Ruheposition auf, in der eine Griffebene parallel zu der Deckeleinheit 16 angeordnet ist. Der Griff 96 weist eine Trageposition auf, in der die Griffebene zumindest im Wesentlichen senkrecht zu der Deckeleinheit 16 angeordnet ist. Der Griff 96 weist in dem vorliegenden Ausführungsbeispiel eine Längserstreckung auf, die in etwa vier Fünfteln der Breite des Handwerkzeugkoffers 10 entspricht.

Der Handwerkzeugkoffer 10 weist eine Schließeinheit 100 auf, die dazu vorgesehen ist, die Deckeleinheit 16 in einem geschlossenen Zustand zu halten. Die Schließeinheit 100 ist dazu vorgesehen, die Deckeleinheit 16 und die Grundeinheit 12 in einem geschlossenen Zustand zu verbinden. In dem vorliegenden Ausführungsbeispiel weist die Schließeinheit 100 zwei bewegliche Schließelemente 102, 104 auf, die als bügelförmige Klappen ausgebildet sind. Die Schließelemente 102, 104 sind schwenkbar an der Deckeleinheit 16 gelagert. Die Schließelemente 102, 104 weisen jeweils an einer der Lagerseite gegenüberliegenden Seite eine Raststelle 106 auf. Die Raststellen 106 sind jeweils dazu vorgesehen, mit korrespondierenden Rastmitteln an der Grundeinheit 12 zusammenzuwirken. Die Schließelemente 102, 104 bilden in einem verrasteten Zustand eine Formschlussverbindung mit der Grundeinheit 12 aus. Der Handwerkzeugkoffer 10 ist dazu vorgesehen, in eine nicht näher dargestellte Ladehaltevorrichtung eingesetzt zu werden, die dazu vorgesehen ist, Energie für die drahtlose Energieübertragung bereitzustellen. Der Handwerkzeugkoffer 10 umfasst eine Halteeinheit 108, die dazu vorgesehen ist, den Handwerkzeugkoffer 10 in der Ladehaltevorrichtung zu halten. Die Halteeinheit 108 umfasst zwei Halteelemente 110, 112, die als federbelastete Rastelemente ausgebildet sind. In einem Zustand, in dem der Handwerkzeugkoffer 10 in die Ladehaltevorrichtung eingesetzt ist, wirken die Halteelemente 110, 112 mit korrespondierenden Halteelementen der Ladehaltevorrichtung zusammen. Die Halteelemente 110, 112 sind an zwei einander gegenüberliegenden Seitenwänden 82, 84 angeordnet.

Der Handwerkzeugkoffer 10 umfasst eine Positioniereinheit 30, die in zumindest einem Betriebszustand bei einer Schließbewegung zwischen der Grundeinheit 12 und der Deckeleinheit 16 eine Schließkraft in eine Positionierkraft auf zumindest einen der Transportgegenstände 20, 22, 24, 26, 28 übersetzt. Die Positionierkraft weist eine wesentliche Komponente in Richtung einer der Seitenwände 14 auf. Eine der Seitenwände 14 ist als eine Rückwand ausgebildet und liegt der Seitenwand 80 gegenüber, an welcher der erste Griff 96 angeordnet ist. Die als Rückwand ausgebildete Seitenwand 14 schließt mit der Bodenwand 78 einen Winkel von etwa 92 Grad ein. Die Seitenwand 80, an welcher der erste Griff 94 angeordnet ist, schließt mit der Bodenwand 78 einen Winkel von etwa 92 Grad ein. In dem vorliegenden Ausführungsbeispiel weist die Positionierkraft eine wesentliche Komponente in Richtung der als Rückwand ausgebildeten Seitenwand 80 auf.

Ein Teil der Transportgegenstände 20, 22, 24, 26 weist jeweils eine Ladeeinheit 114 auf. Die Ladeeinheit 114 ist dazu vorgesehen, in einem Ladevorgang mittels drahtloser Energieübertragung Energie aufzunehmen. Die Ladeeinheit 114 weist eine Sekundärspule auf, die dazu vorgesehen ist, magnetische Feldenergie in elektrische Energie umzuwandeln. Der Handwerkzeugkoffer 10 weist zwei vorbestimmte Ladepositionen der Transportgegenstände 20, 22, 24, 26 auf, die eine Ladeeinheit 114 aufweisen. Die Transportgegenstände 20, 22, 24, 26 sind dazu vorgesehen, in den vorbestimmten Ladepositionen in einem Ladevorgang Energie aufzunehmen. In der vorbestimmten Ladeposition sind die Sekundärspulen der Ladeeinheiten 114 fluchtend zu Primärspulen ausgerichtet, die bei einem Ladevorgang außerhalb des Handwerkzeugkoffers 10 angeordnet sind. Die Positionierkraft weist eine wesentliche Komponente in Richtung der vorbestimmten Ladepositionen auf. Die Positioniereinheit 30 ist dazu vorgesehen, in zumindest einem Betriebszustand bei einer Schließbewegung zwischen der Grundeinheit 12 und der Deckeleinheit 16 die Transportgegenstände 20, 22, 24, 26 in die vorbestimmten Ladepositionen zu bewegen. In einem Betriebszustand, in dem zumindest einer der Transportgegenstände 20, 22, 24, 26 aufgrund eines Fremdkörpers nicht in der zugeordneten Ladeposition angeordnet werden kann, erzeugt die Positioniereinheit 30 einen Widerstand gegen die Schließbewegung und zeigt einem Benutzer eine Störung durch den Fremdkörper an. Der Fremdkörper kann ein Arbeitsmittel, wie beispielsweise ein Einsatzwerkzeug oder ein Befestigungsmittel, sein, oder ein Stück eines Arbeitsmaterials aus Stein, Holz oder Kunststoff.

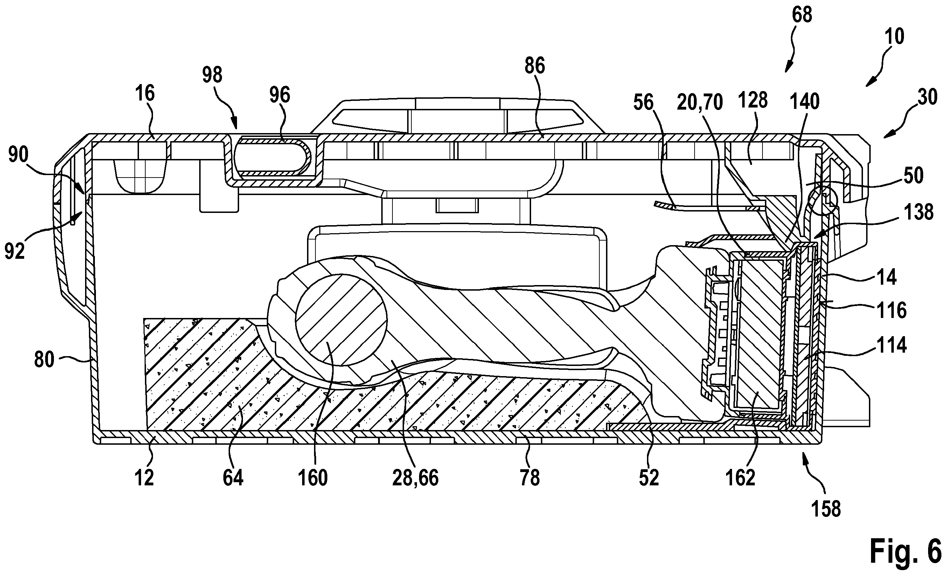

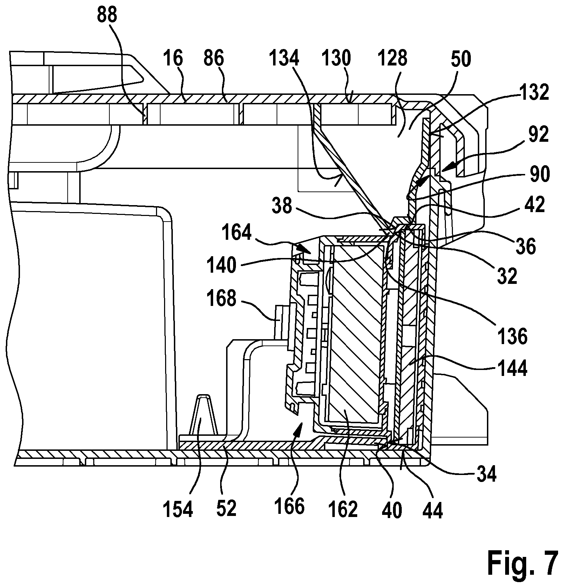

Die Positioniereinheit 30 ist dazu vorgesehen, die Transportgegenstände 20, 22, 24, 26, 28 an die Seitenwand 14 anzunähern und relativ zu der Seitenwand 14 auszurichten. Die Ladepositionen sind unmittelbar angrenzend zu der Seitenwand 14 angeordnet. Die Seitenwand 14 ist für eine drahtlose Energieübertragung durchlässig ausgebildet. Die Transportgegenstände 20, 22, 24, 26, die eine Ladeeinheit 114 aufweisen, weisen jeweils eine eben ausgebildete Ladeseite 116 auf (vgl. Figuren 6 und 7). In der Ladeposition ist die Ladeseite 116 jeweils in Kontakt mit der Seitenwand 14. Die Seitenwand 14 weist eine Innenfläche auf, die den Kofferinnenraum 18 begrenzt. Die Innenfläche ist im Wesentlichen eben ausgebildet. Die Innenfläche ist jeweils in einem Bereich der Ladepositionen der Transportgegenstände 20, 22, 24, 26 eben ausgebildet. Die Innenfläche ist jeweils in einem Bereich der Ladepositionen der Transportgegenstände 20, 22, 24, 26 glatt ausgebildet. In den Ladepositionen liegen die Transportgegenstände 20, 22, 24, 26 mit der Ladeseite 116 an der Seitenwand 14 an. In der Ladeposition sind die Ladeseiten 116 und die Seitenwand 14 jeweils parallel zueinander ausgerichtet. Die Positioniereinheit 30 ist dazu vorgesehen, in zumindest einem Betriebszustand die Transportgegenstände 20, 22, 24, 26 entlang einer weiteren der Seitenwände 82, 84 zu verschieben. Die Positioniereinheit 30 ist dazu vorgesehen, die Transportgegenstände 20, 22, 24, 26 zu fixieren. Die Positioniereinheit 30 ist dazu vorgesehen, die Transportgegenstände 20, 22, 24, 26 relativ zu der Seitenwand 14 zu fixieren. Die Positioniereinheit 30 ist dazu vorgesehen, die Transportgegenstände 20, 22, 24, 26 relativ zu der Bodenwand 78 zu fixieren. Die Positioniereinheit 30 übersetzt in zumindest einem Betriebszustand bei einer Schließbewegung zwischen der Grundeinheit 12 und der Deckeleinheit 16 eine Schließkraft in eine Klemmkraft auf die Transportgegenstände 20, 22, 24, 26, 28. Die Klemmkraft weist zumindest eine wesentliche Komponente in Richtung der Seitenwand 14 auf. Die Klemmkraft presst die Transportgegenstände 20, 22, 24, 26, 28 in einem geschlossenen Zustand der Deckeleinheit 16 gegen die Seitenwand 14. Die Klemmkraft erzeugt jeweils einen Druck zwischen den Ladeseiten 116 der Transportgegenstände 20, 22, 24, 26 und der Seitenwand 14.

Die Positioniereinheit 30 weist in dem vorliegenden Ausführungsbeispiel eine Mehrzahl von Wirkflächen 32, 34, 36 auf, die jeweils dazu vorgesehen sind, mit jeweils einer korrespondierenden Wirkfläche 38, 40, 42 zumindest eines Transportgegenstands 20, 22, 24, 26 zusammenzuwirken. Die Wirkflächen 32, 34, 36 sind jeweils dazu vorgesehen, zumindest in einem geschlossenen Zustand der Deckeleinheit 16 mit jeweils der korrespondierenden Wirkfläche 38, 40, 42 des Transportgegenstands 20, 22, 24, 26 in Kontakt zu sein. Jeweils drei der Wirkflächen 32, 34, 36 sind dazu vorgesehen, mit einem gleichen Transportgegenstand 20, 22, 24, 26 zusammenzuwirken. Die Wirkflächen 32, 34, 36, die dazu vorgesehen sind, mit einem gleichen Transportgegenstand 20, 22, 24, 26 zusammenzuwirken, werden zur weiteren Beschreibung zu einer Gruppe zusammengefasst. Die Positioniereinheit 30 weist in dem vorliegenden Ausführungsbeispiel zwei solcher analog ausgebildeter Gruppen auf. Im Folgenden wird eine erste der Gruppen näher beschrieben. Eine erste der Wirkflächen 32 der Gruppe und eine zweite der Wirkflächen 34 der Gruppe weisen jeweils eine Flächennormale mit einer Komponente in Richtung der Seitenwand 14 auf. Ein Verhältnis der Komponenten der Flächennormalen in Richtung der Seitenwand 14 zu den Komponenten parallel zu der Seitenwand 14 beträgt etwa 4:1. Die Flächennormalen der Wirkflächen 32, 34 schließen mit der Flächennormalen der Seitenwand 14 etwa einen Winkel von 165 Grad ein. Die erste Wirkfläche 32 und die zweite Wirkfläche 34 sind jeweils als eine Schrägfläche ausgebildet. Eine dritte der Wirkflächen 36 der Gruppe weist eine Flächennormale auf, die in einem geschlossenen Zustand der Deckeleinheit im Wesentlichen parallel zu der Seitenwand 14 angeordnet ist.

Der Handwerkzeugkoffer 10 umfasst eine Lagereinheit 46, die eine Schwenkachse 48 aufweist, um welche sie die Deckeleinheit 16 und die Grundeinheit 12 für die Schließbewegung schwenkbar gegeneinander lagert. Die Lagereinheit 46 verbindet in einem montierten Zustand die Grundeinheit 12 mit der Deckeleinheit 16 an einer Längsseite der Grundeinheit 12 und an einer Längsseite der Deckeleinheit 16. Die Lagereinheit 46 ist an der als eine Rückwand ausgebildeten Seitenwand 14 angeordnet. Die Lagereinheit 46 ist der Bodenwand 78 gegenüberliegend angeordnet. Die Schwenkachse 48 der Lagereinheit 46 ist parallel zu der Deckeleinheit 16, zu der als Rückwand ausgebildeten Seitenwand 14 und zu der Bodenwand 78 angeordnet. Die Wirkflächen 32, 34, 36 sind parallel zu der Schwenkachse angeordnet. Die Lagereinheit 46 weist in dem vorliegenden Ausführungsbeispiel zueinander korrespondierend ausgebildete Lagerelemente 118, 120 an zwei in Längsrichtung des Handwerkzeugkoffers 10 beabstandet angeordneten Lagerstellen auf. Ein erster Teil der Lagerelemente 118 ist an der Grundeinheit 12 angeordnet, ein weiterer Teil der Lagerelemente 120 ist an der Deckeleinheit 16 angeordnet. Die Rückwand der Grundeinheit 12 weist eine Außenseite auf, an welcher der erste Teil der Lagerelemente 118 angeordnet ist. Die Positionierkraft weist eine wesentliche, in radialer Richtung zu der Schwenkachse 48 ausgerichtete Komponente auf. Die Komponente ist in Richtung auf die Schwenkachse 48 orientiert. Die Positionierkraft weist eine wesentliche, in Umfangsrichtung zu der Schwenkachse 48 ausgerichtete Komponente auf.

Die Positioniereinheit 30 weist ein Positioniermittel 50 auf, das in einem montierten Zustand an die Deckeleinheit 16 angebunden ist. Jeweils die erste Wirkfläche 32 in einer Gruppe von Wirkflächen 32, 34, 36, die dazu vorgesehen sind, mit einem gleichen Transportgegenstand 20, 22, 24, 26 zusammenzuwirken, ist an dem Positioniermittel 52 angeordnet. Jeweils die dritte Wirkfläche 36 in der Gruppe ist an dem Positioniermittel 50 angeordnet. Die an dem Positioniermittel 50 angeordneten Wirkflächen 32, 36 sind benachbart zueinander angeordnet und weisen eine gemeinsame Kante auf. Das Positioniermittel 50 ist in dem vorliegenden Ausführungsbeispiel fest mit der Deckeleinheit 16 verbunden. Das Positioniermittel 50 ist getrennt von der Deckeleinheit 16 ausgebildet und ist in einem montierten Zustand mit der Deckeleinheit 16 verschraubt. Das Positioniermittel 50 weist eine Mehrzahl von Bohrungen auf, durch welche Schrauben in einem montierten Zustand hindurchgeführt sind. Das Positioniermittel 50 weist eine Mehrzahl von Schraubbuchten 122, 124, 126 auf, die einen Zugang zu den Bohrungen für Schrauben jeweils in einer Schraubrichtung öffnen. In dem vorliegenden Ausführungsbeispiel weist das Positioniermittel 50 drei Bohrungen zu einer Aufnahme von Schrauben auf. Eine der Schraubbuchten 124 ist, bezogen auf eine Haupterstreckung der Positioniereinheit 30, zentral angeordnet. Zwei weitere der Schraubbuchten 122, 126 sind an einander gegenüberliegenden Enden des Positioniermittels 50 angeordnet. Das Positioniermittel 50 weist schlitzförmige Aussparungen auf, die dem Wabengitter 88 der Deckeleinheit 16 entsprechen. In einem montierten Zustand ist das Positioniermittel 50 in Kontakt mit der Deckelwand 86. Das Positioniermittel 50 ist in einem geschlossenen Zustand der Deckeleinheit 16 wirkungsmäßig zwischen der Deckeleinheit 16 und den in den Ladepositionen angeordneten Transportgegenständen 20, 22, 24, 26 angeordnet. Das Positioniermittel 50 weist eine Aussparung 54 zur Aufnahme eines Gegenstands 56 auf. Die Aussparung 54 ist in dem vorliegenden Ausführungsbeispiel für ein Halteelement vorgesehen. Das Halteelement ist an einem der Transportgegenstände 28 angeordnet und dazu vorgesehen, den Transportgegenstand 28 an einem Hosengürtel oder an einem Werkzeuggurt zu befestigen. Der Gegenstand 56 ist in dem vorliegenden Ausführungsbeispiel als eine bogenförmige Metalllasche ausgebildet. Die Aussparung 54 ist prismenförmig ausgebildet und weist einen Steg auf, der dazu vorgesehen ist, in eine Ausnehmung des Gegenstands 56 einzugreifen.

Das mit der Deckeleinheit 16 verbundene Positioniermittel 50 ist in Form einer Leiste ausgebildet. In dem vorliegenden Ausführungsbeispiel ist das Positioniermittel 50 aus Kunststoff ausgebildet. Es ist denkbar, dass das Positioniermittel 50 aus einem anderen dem Fachmann geeignet erscheinenden Material ausgebildet ist, beispielsweise aus Metall. Das Positioniermittel 50 ist in einem montierten Zustand parallel zu der Schwenkachse 48 angeordnet. Das Positioniermittel 50 weist eine Länge auf, die sich entlang der Deckeleinheit 16 und in Richtung der Schwenkachse 48 erstreckt. Das Positioniermittel 50 weist eine Breite auf, die sich entlang der Deckeleinheit 16 und im Wesentlichen senkrecht zu der Schwenkachse 48 erstreckt. Das Positioniermittel 50 weist eine Höhe auf, die sich senkrecht zu der Deckeleinheit 16 und im Wesentlichen senkrecht zu der Schwenkachse 48 erstreckt. Die Breite des Positioniermittels 50 beträgt etwa ein Sechstel der Länge des Positioniermittels 50. Die Höhe und die Breite des Positioniermittels 50 entsprechen einander in etwa. Das Positioniermittel 50 weist im Wesentlichen einen trapezförmigen Querschnitt 128 auf. Es ist denkbar, dass das Positioniermittel 50 einen im Wesentlichen dreieckigen Querschnitt aufweist. Eine erste Seite 130 des Querschnitts 128 erstreckt sich in Richtung der Breite und ist in einem montierten Zustand parallel zu der Deckeleinheit 16 und der Deckeleinheit 16 zugewandt angeordnet. Eine weitere Seite 132 des Querschnitts 128 erstreckt sich im Wesentlichen in Richtung der Höhe und ist im Wesentlichen senkrecht zu der Deckeleinheit 16 angeordnet. Die weitere Seite 132 ist in einem geschlossenen Zustand der Schwenkachse 48 und/oder der als Rückwand ausgebildeten Seitenwand 14 der Grundeinheit 12 zugewandt. Eine dritte Seite 134 des Querschnitts 128 ist schräg zu der Deckeleinheit 16 angeordnet. Die dritte Seite 134 des Querschnitts 128 ist von der Schwenkachse 48 abgewandt angeordnet. Das Positioniermittel 50 verjüngt sich mit zunehmendem Abstand von der Deckeleinheit 16. Eine vierte Seite 136 des Querschnitts 128 ist die kürzeste der vier Seiten 130, 132, 134, 136 und ist in einem montierten Zustand der Deckeleinheit 16 gegenüberliegend angeordnet. Die vierte Seite 136 ist im Wesentlichen parallel zu der Deckeleinheit 16 angeordnet.

Der vierten Seite 136 des Querschnitts 128 entspricht eine Seite des Positioniermittels 50, die von der Deckeleinheit 16 abgewandt angeordnet ist. Das Positioniermittel 50 ist in dem vorliegenden Ausführungsbeispiel zu einer gleichzeitigen Positionierung von zwei Transportgegenständen 20, 22, 24, 26 vorgesehen. Das Positioniermittel 50 weist an der vierten Seite 136 zwei Aussparungen 138 auf, die jeweils zur Aufnahme jeweils eines Transportgegenstands 20, 22, 24, 26 vorgesehen sind. Die Aussparungen 138 sind bezogen auf eine Ebene senkrecht zu einer Haupterstreckungsrichtung symmetrisch ausgebildet. Die Aussparungen 138 sind analog zueinander ausgebildet, weshalb im Folgenden nur eine erste der Aussparungen 138 näher beschrieben wird. Die Aussparung 138 erstreckt sich in Längsrichtung des Positioniermittels 50 und weist eine Länge von etwa einem Fünftel der Länge des Positioniermittels 50 auf. Ein Teil der Wirkflächen 32, 36 des Positioniermittels 50 sind im Bereich der Aussparungen 138 angeordnet. Jeweils die erste Wirkfläche 32 und die dritte Wirkfläche 36 einer Gruppe von Wirkflächen 32, 34, 36, die dazu vorgesehen sind, mit einem gleichen Transportgegenstand zusammenzuwirken, sind im Bereich der Aussparung 138 angeordnet. Die Wirkflächen 32, 36 sind jeweils als längliche Rechtecke ausgebildet. Eine Haupterstreckung der Wirkflächen 32, 36 erstreckt sich jeweils in Längsrichtung des Positioniermittels 50. Das Positioniermittel 50 bildet aufgrund der Aussparung 138 an der Seite 136, die der Deckeleinheit 16 abgewandt ist, im Querschnitt 128 eine im Wesentlichen dreieckige Nase 140 aus. Die Nase 140 weist eine Seite auf, die in einem geschlossenen Zustand der Deckeleinheit 16, der als Rückwand ausgebildeten Seitenwand 14 der Grundeinheit 12 zugewandt ist. An der Seite der Nase 140 ist die erste Wirkfläche 32 angeordnet. Die dritte Wirkfläche 36 ist im Wesentlichen parallel zu der Deckeleinheit 16 angeordnet.

Die Positioniereinheit 30 weist ein weiteres Positioniermittel 52 auf, das in einem montierten Zustand an die Grundeinheit 12 angebunden ist. Das weitere Positioniermittel 52 weist in dem vorliegenden Ausführungsbeispiel ein Einlegeelement auf und ist in einem montierten Zustand in die Grundeinheit 12 eingelegt. Es ist denkbar, dass das weitere Positioniermittel 52 fest mit der Grundeinheit 12 verbunden ist und/oder einstückig mit der Grundeinheit 12 ausgebildet ist. Es ist denkbar, dass das weitere Positioniermittel 52 mittels einer formschlüssigen Verbindung, mittels einer Rastverbindung und/oder mittels einer Klettverbindung mit der Grundeinheit 12 verbunden ist. Es ist auch denkbar, dass das Positioniermittel 52 eine Mehrzahl von Einlegeelementen aufweist. In dem vorliegenden Ausführungsbeispiel ist das Einlegeelement aus Kunststoff ausgebildet. Das Einlegeelement ist aus einer Kunststoffplatte geformt. Es ist auch denkbar, dass das Einlegeelement massiv ausgebildet ist. Das weitere Positioniermittel 52 ist in dem vorliegenden Ausführungsbeispiel zu einer gleichzeitigen Positionierung von zwei Transportgegenständen 20, 22, 24, 26 vorgesehen. Das weitere Positioniermittel 52 weist zwei Aufnahmen auf, die jeweils für einen der Transportgegenstände 20, 22, 24, 26 vorgesehen sind. Die Aufnahmen weisen eine Symmetrieebene auf, die senkrecht zu der Bodenwand 78 und senkrecht zu der Seitenwand 14 angeordnet ist. Die Aufnahmen sind jeweils dazu vorgesehen, die Transportgegenstände 20, 22, 24, 26 in zwei zueinander entgegengesetzten Orientierungen zu lagern. Ein Teil der Wirkflächen 34 der Positioniereinheit 30 ist an dem weiteren Positioniermittel 52 angeordnet. Die Wirkflächen 34 sind an den Aufnahmen des Positioniermittels 52 für die Transportgegenstände 20, 22, 24, 26 angeordnet. Die an dem weiteren Positioniermittel 52 angeordneten Wirkflächen 34 sind jeweils die zweiten Wirkflächen 34 in den Gruppen von Wirkflächen 32, 34, 36, die dazu vorgesehen sind mit dem gleichen Transportgegenstand 20, 22, 24, 26 zusammenzuwirken.

Die Positioniereinheit 30 weist ein Anzeigemittel 58, 60, 62 auf, das dazu vorgesehen ist, einem Benutzer eine Lagerposition des zumindest einen Transportgegenstands 20, 22, 24, 26, 28 anzuzeigen. Die Lagerposition entspricht für die eine Ladeeinheit 114 aufweisenden Transportgegenstände 20, 22, 24, 26 der vorbestimmten Ladeposition. In dem vorliegenden Ausführungsbeispiel weist das Anzeigemittel 58, 60, 62 zwei Reliefs auf, welche die Ausnahmen für die Transportgegenstände 20, 22, 24, 26 ausbilden. Die Reliefs entsprechen jeweils einem Negativ eines Reliefs des für die jeweilige Aufnahme vorgesehenen Transportgegenstands 20, 22, 24, 26. Die Aufnahmen weisen jeweils eine Bodenwandung 142 und zwei Seitenwandungen 144, 146 auf, die jeweils mit dem Transportgegenstand 20, 22, 24, 26 in der Lagerposition in Kontakt sind. Die Positioniereinheit 30 umschließt die Transportgegenstände 20, 22, 24, 26 in einem eingelegten Zustand teilweise. Bei einem Einlegevorgang erkennt der Benutzer durch einen Vergleich der Reliefs die Lagerposition der Transportgegenstände 20, 22, 24, 26. Bei einer ungeeigneten Lage der Transportgegenstände 20, 22, 24, 26 kommen für einen Kontakt vorgesehene Flächen nur teilweise miteinander in Kontakt und dem Benutzer wird so angezeigt, dass die Transportgegenstände 20, 22, 24, 26 nicht in der Lagerposition angeordnet sind.

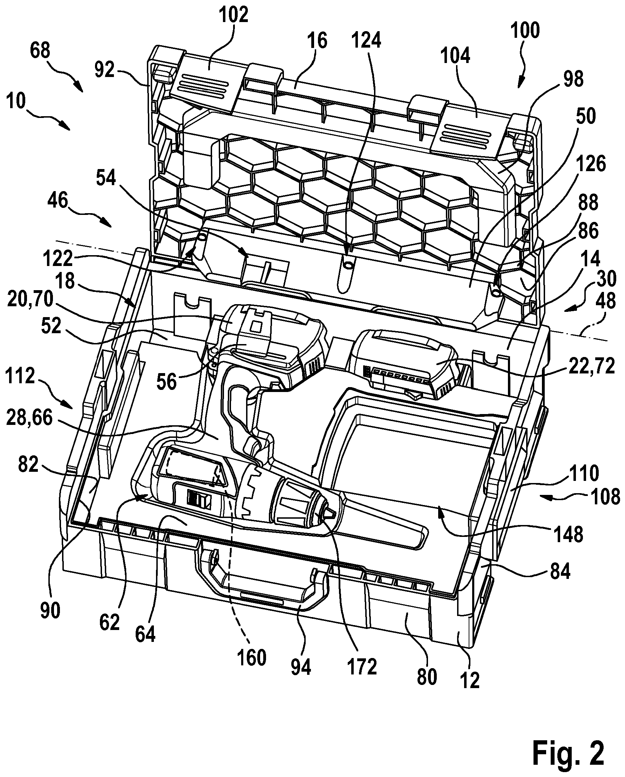

Der Handwerkzeugkoffer 10 weist eine zumindest teilweise einstellbare Koffereinlage 64 auf, die zu einer Lagerung einer Handwerkzeugmaschine 66 vorgesehen ist. Die Koffereinlage 64 ist in einem montierten Zustand in Kontakt mit der Bodenwand 78 des Handwerkzeugkoffers 10. Die Koffereinlage 64 liegt in einem montierten Zustand auf der Bodenwand 78 des Handwerkzeugkoffers 10 auf. Die Koffereinlage 64 weist eine Aufnahme für die Handwerkzeugmaschine 66 auf (vgl. Figur 2). Es ist denkbar, dass die Aufnahme für unterschiedliche Typen von Handwerkzeugmaschinen vorgesehen ist. Ein Relief der Aufnahme entspricht einem Negativ eines Reliefs der Handwerkzeugmaschine 66. Das Relief bildet ein Anzeigemittel 62 des Handwerkzeugkoffers 10 aus, das dazu vorgesehen ist, einem Benutzer eine Lagerposition der Handwerkzeugmaschine 66 anzuzeigen. Die Koffereinlage 64 weist eine obere Begrenzungsfläche auf. Das Relief der Aufnahme ist als eine Vertiefung in die obere Begrenzungsfläche eingelassen. Das Relief weist an einem Übergang des Reliefs zu der Begrenzungsfläche einen Abstand zu der Handwerkzeugmaschine 66 in der Lagerposition auf. Alternativ ist denkbar, dass das Relief im Bereich des Übergangs an der Handwerkzeugmaschine 66 anliegt. Die Koffereinlage 64 weist eine weitere Aufnahme 148 auf, die für Zubehörteile vorgesehen ist, wie beispielsweise zur Aufnahme eines kabelgebundenen Ladegeräts, Einsatzwerkzeugen und/oder für Arbeitsmaterial. Die weitere Aufnahme 148 weist eine Stufe auf, die an einem Bodenumfang umläuft. Es ist denkbar, dass die Koffereinlage 64 weitere dem Fachmann geeignet erscheinende Aufnahmen aufweist. Die Koffereinlage 64 ist in dem vorliegenden Ausführungsbeispiel als ein massiver Körper ausgebildet, beispielsweise aus einem geschäumten Kunststoff oder aus einem anderen dem Fachmann geeignet erscheinenden Material. Es ist auch denkbar, dass die Koffereinlage 64 aus einer zumindest im Wesentlichen hohlen Kunststoffform besteht, die beispielsweise in einem Thermoformungsverfahren aus einer Kunststoffplatte hergestellt ist.

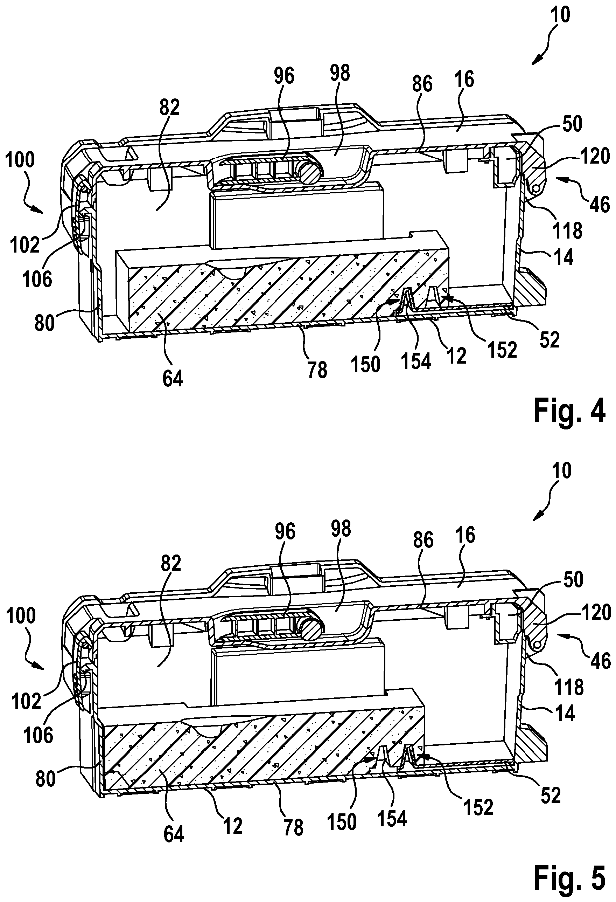

Die Koffereinlage 64 ist in dem vorliegenden Ausführungsbeispiel für zwei Einlegepositionen relativ zu der Grundeinheit 12 vorgesehen. Die Einlegepositionen unterscheiden sich durch einen Abstand der Koffereinlage von der als Rückwand ausgebildeten Seitenwand des Handwerkzeugkoffers (vgl. Figuren 4 und 5). Der Handwerkzeugkoffer 10 weist eine Einstelleinheit auf, die dazu vorgesehen ist, die Koffereinlage 64 in den unterschiedlichen Einlegepositionen zu fixieren. Die Einstelleinheit umfasst vier Formschlusselemente 150, 152 die an der Koffereinlage 64 angeordnet sind. Zwei der Formschlusselemente 150, 152 sind in den Figuren 4 und 5 gezeigt. Die Formschlusselemente 150, 152 sind an einer Seite der Koffereinlage 64 angeordnet, die in einem montierten Zustand der Bodenwand 78 der Grundeinheit 12 zugewandt ist. Die Formschlusselemente 150, 152 sind in dem vorliegenden Ausführungsbeispiel als schlitzförmige Aussparungen ausgebildet. Die Aussparungen weisen einen dreieckigen Querschnitt auf. Die Formschlusselemente 150, 152 sind bezogen auf die Länge des Handwerkzeugkoffers 10 jeweils an einem Rand der Koffereinlage 64 angeordnet. Die Einstelleinheit weist in dem vorliegenden Ausführungsbeispiel zwei weitere Formschlusselemente 154, 156 auf, die komplementär zu den Formschlusselementen 150, 152 der Koffereinlage 64 ausgebildet sind. Die zwei weiteren Formschlusselemente 154, 156 sind an dem weiteren Positioniermittel 52 angeordnet und als Zapfen ausgebildet. Die Formschlusselemente 154, 156 sind einstückig mit dem weiteren Positioniermittel 52 ausgebildet. Die weiteren Formschlusselemente 154, 156 sind in einem montierten Zustand senkrecht zu der Bodenwand 78 ausgerichtet. Ein erstes Paar der Formschlusselemente 150 der Koffereinlage 64 ist in einer ersten Einlegeposition der Koffereinlage 64 mit den an dem weiteren Positioniermittel 52 angeordneten Formschlusselementen 154, 156 in Eingriff. Ein weiteres Paar der Formschlusselemente 152 der Koffereinlage 64 ist in einer weiteren Einlegeposition der Koffereinlage 64 mit den an dem weiteren Positioniermittel 52 angeordneten Formschlusselementen 154, 156 in Eingriff. Es ist denkbar, dass die Einstelleinheit weitere Formschlusselemente aufweist, die dazu vorgesehen sind, bei weiteren Einlegepositionen der Koffereinlage 64 miteinander in Eingriff zu sein. Alternativ ist auch denkbar, dass die Einstelleinheit eine Linearführung und/oder einen gehemmten Lineartrieb umfasst.

In dem vorliegenden Ausführungsbeispiel umfasst das System 68 fünf Transportgegenstände 20, 22, 24, 26, 28. Es ist denkbar, dass das System 68 eine größere Zahl oder eine kleinere Zahl von Transportgegenständen 20, 22, 24, 26, 28 umfasst. Vier der Transportgegenstände 20, 22, 24, 26 sind jeweils als eine Ackuvorrichtung 70, 72, 74, 76 ausgebildet. Im Folgenden werden Merkmale, welche die als Akkuvorrichtung 70, 72, 74, 76 ausgebildeten Transportgegenstände 20, 22, 24, 26 in analoger Weise aufweisen, stellvertretend für einen ersten der Transportgegenstände 20 beschrieben.

Der Transportgegenstand 20 weist eine Länge eine Breite und eine Höhe auf. In einem in den Handwerkzeugkoffer 10 eingelegten Zustand ist die Breite zumindest im Wesentlichen senkrecht zu der Bodenwand 78 des Handwerkzeugkoffers 10 ausgerichtet. In dem eingelegten Zustand ist die Höhe zumindest im Wesentlichen senkrecht zu der Seitenwand 14, die als Rückwand ausgebildet ist, angeordnet. Die Länge ist parallel zu der Seitenwand 14 und zu der Bodenwand 78 angeordnet. Der Transportgegenstand 20 weist in dem vorliegenden Ausführungsbeispiel eine erste Symmetrieebene auf, die sich entlang der Höhe und entlang der Länge des Transportgegenstands 20 erstreckt. Der Transportgegenstand 20 umfasst einen Grundkörper, der eine Verbreiterung 158 aufweist. Die Verbreiterung 158 weist zwei flügelartige Auswölbungen auf. Je eine der Auswölbungen ist in dem vorliegenden Ausführungsbeispiel jeweils an einer Seite angeordnet, die sich entlang der Länge und der Höhe erstreckt. Es ist auch denkbar, dass die Auswölbungen jeweils an einer anderen Seite des Transportgegenstands 20 angeordnet sind. Die Auswölbungen weisen jeweils einen trapezförmigen Querschnitt auf in einer Ebene senkrecht zu der Länge. Die Positioniermittel 50, 52 weisen jeweils einen dem Transportgegenstand 20 zugeordneten Bereich auf der ein Relief aufweist, das einem Negativ der Auswölbungen entspricht. In dem vorliegenden Ausführungsbeispiel ist die Verbreiterung 158 in einem Fußbereich des Transportgegenstands 20 angeordnet. Die Verbreiterung 158 ist benachbart zu der Ladeseite 116 des Transportgegenstands 20 angeordnet. Der Transportgegenstand 20 weist in dem Bereich der Verbreiterung eine zweite Symmetrieebene auf, die sich entlang der Höhe und entlang der Breite erstreckt. Es ist auch denkbar, dass die Verbreiterung 158 auf einer anderen Höhe, beispielsweise auf einer mittleren Höhe des Transportgegenstands 20 angeordnet ist. Die Verbreiterung 158 ragt auf zwei gegenüberliegenden Seiten über einen zu der Verbreiterung 158 benachbarten Bereich hinaus.

Die Verbreiterung 158 weist vier Wirkflächen 38, 40, 42, 44 auf. Zwei der Wirkflächen 38, 40 sind als Schrägflächen ausgebildet und schließen mit der Ladeseite 116 jeweils einen Winkel von etwa 15 Grad ein. Die als Schrägflächen ausgebildeten Wirkflächen 38, 40 sind dazu vorgesehen, mit den als Schrägflächen ausgebildeten Wirkflächen 32, 34 der Positioniereinheit 30 zusammenzuwirken. Eine erste der Wirkflächen 38 ist dazu vorgesehen, mit dem an die Deckeleinheit 16 angebundenen Positioniermittel 50 zusammenzuwirken. Eine zweite der Wirkflächen 40 ist dazu vorgesehen, mit dem an die Grundeinheit 12 angebundenen Positioniermittel 52 zusammenzuwirken. Die erste Wirkfläche 38 und die zweite Wirkfläche 40 sind in Bezug auf die Symmetrieebenen des Transportgegenstands 20 symmetrisch ausgebildet. Die als Schrägflächen ausgebildeten Wirkflächen 38, 40 des Transportgegenstands 20 und die als Schrägflächen ausgebildeten Wirkflächen 32, 34 der Positioniereinheit 30 sind dazu vorgesehen, aneinander vorbei zu gleiten. Die als Schrägflächen ausgebildeten Wirkflächen 38, 40 des Transportgegenstands 20 und die als Schrägflächen ausgebildeten Wirkflächen 32, 34 der Positioniereinheit 30 sind in dem vorliegenden Ausführungsbeispiel in einem eingesetzten Zustand des Transportgegenstands 20 miteinander in Kontakt. Die als Schrägflächen ausgebildeten Wirkflächen 38, 40 des Transportgegenstands 20 und die als Schrägflächen ausgebildeten Wirkflächen 32, 34 der Positioniereinheit 30 bilden in einem montierten Zustand einen Keiltrieb aus, der eine Annäherung der Schrägflächen der Positioniereinheit 30 in eine Kraft auf den Transportgegenstand 20 in Richtung der Seitenwand 14 übersetzt. Eine dritte der Wirkflächen 42 und eine vierte der Wirkflächen 44 sind jeweils im Wesentlichen senkrecht zu der Ladeseite 116 angeordnet. Die dritte der Wirkflächen 42 ist dazu vorgesehen, mit dem an die Deckeleinheit 16 angebundenen Positioniermittel 52 zusammenzuwirken. Die vierte der Wirkflächen 44 ist dazu vorgesehen, mit der Bodenwand 78 der Grundeinheit 12 zusammenzuwirken.

Der als eine Akkuvorrichtung 70 ausgebildete Transportgegenstand 20 ist dazu vorgesehen, Energie zu speichern zur Energieversorgung einer Antriebseinheit 160 einer Handwerkzeugmaschine 66. Es ist denkbar, dass die Akkuvorrichtung 70 dazu vorgesehen ist, weitere Einheiten mit elektrischer Energie zu versorgen, wie beispielsweise eine Anzeige und/oder eine Steuer- und/oder Regeleinheit. Die Akkuvorrichtung 70 ist zu einem Ladeprozess mittels einer drahtlosen Energieübertragung vorgesehen. Die Akkuvorrichtung 70 ist in dem vorliegenden Ausführungsbeispiel im Wesentlichen quaderförmig ausgebildet. Die Akkuvorrichtung 70 weist eine Energiespeichereinheit 162 auf, die dazu vorgesehen sind, elektrische Energie zu speichern und die Antriebseinheit 160 der Handwerkzeugmaschine 66 mit elektrischer Energie zu versorgen. Die Akkuvorrichtung 70 weist ferner ein Gehäuse auf, das dazu vorgesehen ist, Bauteile der Akkuvorrichtung 70 zu lagern und zu schützen. Das Gehäuse ist dazu vorgesehen, die Energiespeichereinheit 162 zu lagern und zu schützen. Das Gehäuse ist in dem vorliegenden Ausführungsbeispiel aus einem festen Kunststoff ausgebildet.

Die Akkuvorrichtung 70 weist eine mechanische Schnittstelleneinheit und eine elektrische Schnittstelleneinheit zu einer lösbaren elektrischen und mechanischen Verbindung mit der Handwerkzeugmaschine 66 auf. Die Schnittstelleneinheit ist an einer der Gehäusegrundseite gegenüberliegenden Schnittstellenseite der Akkuvorrichtung 70 angeordnet. Die Akkuvorrichtung 70 weist eine Einsteckrichtung auf. Die Einsteckrichtung ist in dem vorliegenden Ausführungsbeispiel parallel zu der Ladeseite 116 ausgerichtet. Das Gehäuse ist an der Schnittstellenseite stufenförmig ausgebildet. In dem vorliegenden Ausführungsbeispiel weist das Gehäuse an einem Stufenübergang zwei Führungselemente 164, 166 auf, die jeweils als eine Nut in Einsteckrichtung ausgebildet sind.

Die mechanische Schnittstelleneinheit umfasst ein federbelastetes Rastelement 168, das dazu vorgesehen ist, die Akkuvorrichtung 70 mit der Handwerkzeugmaschine 66 zu verrasten. Das Rastelement 168 ist schwenkbar an der Schnittstellenseite gelagert und ragt in einer Rastposition über die Schnittstellenseite hinaus. Das Rastelement 168 ist zu einer formschlüssigen Verbindung mit einem nicht näher dargestellten entsprechenden Element der Handwerkzeugmaschine 66 vorgesehen. Die Schnittstelleneinheit weist ein Entriegelungselement 170 auf. Das Entriegelungselement 170 ist mit dem Rastelement 168 verbunden und dazu vorgesehen, das Rastelement 168 entgegen einer Federkraft zu schwenken und in die Schnittstellenseite zu einer Entriegelung zu versenken. Die Akkuvorrichtung 70 ist dazu vorgesehen, ausgehend von einem verbundenen Zustand werkzeuglos und zerstörungsfrei von der Handwerkzeugmaschine 66 gelöst zu werden.

Das System 68 umfasst eine Handwerkzeugmaschine 66, die dazu vorgesehen ist, zumindest mechanisch an die Akkuvorrichtung 70 gekoppelt in dem Handwerkzeugkoffer 10 transportiert und/oder gelagert zu werden. Der fünfte der Transportgegenstände 28 ist als die Handwerkzeugmaschine 66 ausgebildet. Die Handwerkzeugmaschine 66 ist in dem vorliegenden Ausführungsbeispiel als ein Akkuschrauber ausgebildet. Die Handwerkzeugmaschine 66 umfasst einen Grundkörper und einen Griff. Die Handwerkzeugmaschine 66 weist eine elektrische Antriebseinheit 160 auf, die als ein Elektromotor ausgebildet ist, sowie eine Werkzeugaufnahme 172, die zu einer Aufnahme eines nicht näher dargestellten Einsatzwerkzeugs, wie beispielsweise einer Schraubendreherklinge vorgesehen ist. Die Handwerkzeugmaschine 66 umfasst ferner eine Getriebeeinheit, die dazu vorgesehen ist, eine Drehzahl der Antriebseinheit 160 in einer Drehzahl der Werkzeugaufnahme 172 zu übersetzen und/oder eine Drehrichtung umzukehren. Der Griff ist in einem Winkel zu dem Grundkörper an einer Seite des Grundkörpers angeordnet. In einem Betriebszustand umfasst ein Benutzer den Griff mit einer oder mit beiden Händen und hält und/oder führt die Handwerkzeugmaschine 66.

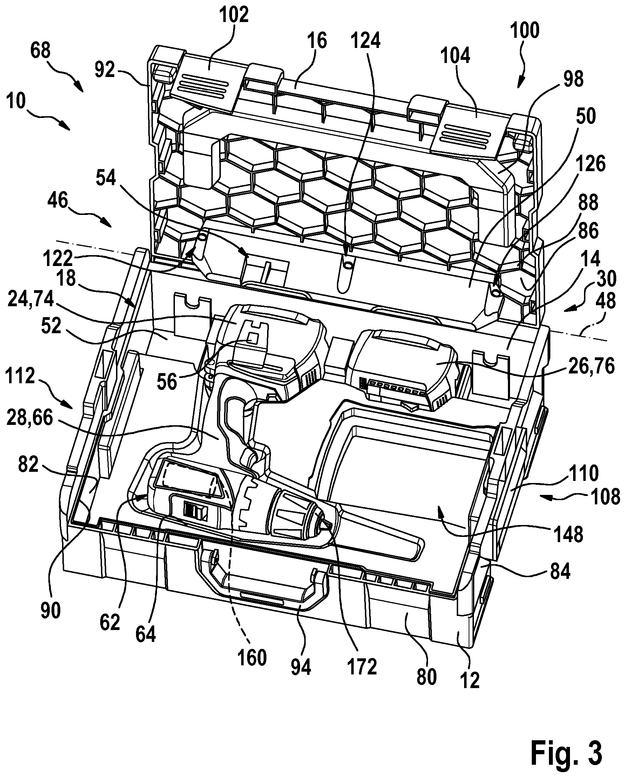

Der Griff der Handwerkzeugmaschine 66 weist eine Aufnahme auf, die der Schnittstelleneinheit der Akkuvorrichtung 70 entspricht. Die Schnittstelleneinheit und die Aufnahme des Griffs sind dazu vorgesehen, mittels einer Einsteckbewegung miteinander verbunden zu werden. Zwei der als Akkuvorrichtung 70, 72 ausgebildeten Transportgegenstände 20, 22 des Systems 68 weisen eine kleinere Höhe auf als zwei weitere der als Akkuvorrichtung 74, 76 ausgebildeten Transportgegenstände 24, 26 (vgl. Figur 3). Die Akkuvorrichtungen 74, 76, die eine größere Höhe aufweisen, weisen auch eine größere Kapazität auf. Es ist denkbar, dass die Akkuvorrichtungen 70, 72, 74, 76 eine unterschiedliche Leistung und/oder einen unterschiedlichen maximal entnehmbaren Strom aufweisen. Die Akkuvorrichtungen 70, 72, 74, 76 weisen eine gleiche Betriebsspannung auf. Die Akkuvorrichtungen 70, 72, 74, 76 weisen eine gleiche Länge und eine gleiche Breite auf. Die unterschiedlichen Einlegepositionen der Koffereinlage 64 entsprechen den unterschiedlichen Größen der Akkuvorrichtungen 70, 72, 74, 76. Die erste Einlegeposition der Koffereinlage 64 ist für die Aufnahme einer Einheit aus der Handwerkzeugmaschine 66 gekoppelt mit einer der kleineren Akkuvorrichtungen 70, 72 vorgesehen. Die zweite Einlegeposition der Koffereinlage 64 ist für die Aufnahme einer Einheit aus der Handwerkzeugmaschine 66 gekoppelt mit einer der größeren Akkuvorrichtungen 74, 76 vorgesehen.

Bei einem Verfahren zum Einlegen von Transportgegenständen in den Handwerkzeugkoffer 10 wird bei der Schließbewegung die Schließkraft in die Positionierkraft übersetzt. Eine Handwerkzeugmaschine 66 gekoppelt mit einer Ackuvorrichtung 70, 74 und eine weitere Akkuvorrichtung 72, 76 oder lediglich zwei Akkuvorrichtungen 70, 72, 74, 76 werden in die Aufnahmen des weiteren Positioniermittels 52 eingelegt. Der Bodenwand 78 zugewandte Wirkflächen 44 an den Verbreiterungen 158 der als Akkuvorrichtungen 70, 72, 74, 76 ausgebildeten Transportgegenstände 20, 22, 24, 26 kommen in Kontakt mit entsprechenden Wirkflächen 40 der Positioniereinheit 30, die an dem an die Bodenwand 78 der Grundeinheit 12 angebundenen Positioniermittel 52 angeordnet sind. Durch eine Schwerkraft, die auf die Transportgegenstände 20, 22, 24, 26 wirkt, gleiten die Transportgegenstände 20, 22, 24, 26 jeweils in die vorgestimmte Lagerposition und nähern sich an die als Rückwand ausgebildete Seitenwand 14 der Grundeinheit 12 an. In einem Betriebszustand, in dem die Transportgegenstände 20, 22, 24, 26 nicht in die vorbestimmte Lagerposition gleiten, erkennt der Benutzer, dass die Transportgegenstände 20, 22, 24, 26 nicht wie vorgesehen eingelegt sind, und/oder dass sich Fremdkörper im Bereich zumindest einer Aufnahme befinden. Der Benutzer entfernt die Fremdkörper und/oder korrigiert eine Ausrichtung der Transportgegenstände 20, 22, 24, 26. Der Benutzer schwenkt die Deckeleinheit 16 in einer Schließbewegung auf die Grundeinheit 12. Die Deckeinheit schwenkt um die Schwenkachse 48 der Lagereinheit 46, welche die Deckeleinheit 16 mit der Grundeinheit 12 verbindet. Das an die Deckeleinheit 16 angebundene Positioniermittel 50 kommt mit den als Akkuvorrichtungen 70, 72, 74, 76 ausgebildeten Transportgegenständen 20, 22, 24, 26 in Kontakt. Die als Schrägflächen ausgebildeten Wirkflächen 32, 34 der Positioniereinheit 30 kommen mit den an den Transportgegenständen 20, 22, 24, 26 angeordneten Wirkflächen 38, 40 in Kontakt. Die Wirkflächen 32, 34, 38, 40 gleiten aneinander vorbei und übersetzen die Annäherungsbewegung der Wirkflächen 32, 34 der Positioniereinheit 30 in eine Kraft auf die Transportgegenstände 20, 22, 24, 26 in Richtung der als Rückwand ausgebildeten Seitenwand 14. In einem Betriebszustand, in dem die Transportgegenstände 20, 22, 24, 26 beabstandet von der als Rückwand ausgebildeten Seitenwand 14 angeordnet sind, bewegt die Positioniereinheit 30 die Transportgegenstände 20, 22, 24, 26 in Richtung der Seitenwand 14. Die Positioniereinheit 30 bewegt die Transportgegenstände 20, 22, 24, 26 jeweils in Richtung einer vorbestimmten Ladeposition. In dem vorliegenden Ausführungsbeispiel sind die Deckeleinheit 16 und die Positioniermittel 50, 52 elastisch ausgebildet. Die Deckeleinheit 16 und die Positioniermittel 50, 52 werden bei der Schließbewegung durch den Kontakt mit den Transportgegenständen 20, 22, 24, 26 geringfügig verformt und erzeugen eine als Schließkraft wirkende Spannkraft. Die Positioniereinheit 30 übersetzt die Schließkraft in eine Klemmkraft auf die Transportgegenstände 20, 22, 24, 26. Die Klemmkraft presst die Ladeseite 116 der Transportgegenstände 20, 22, 24, 26 gegen die als Rückwand ausgebildete Seitenwand 14 der Grundeinheit 12.

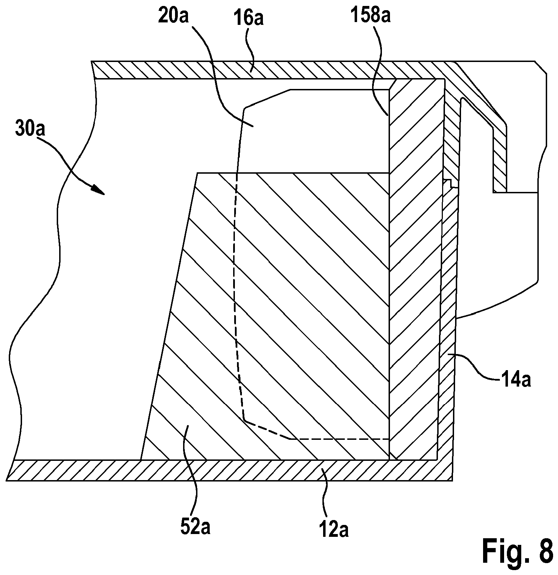

In der Figur 8 ist ein weiteres Ausführungsbeispiel der Erfindung gezeigt. Die nachfolgenden Beschreibungen und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 7, verwiesen werden kann. Zur Unterscheidung der Ausführungsbeispiele ist den Bezugszeichen des Ausführungsbeispiels in der Figur 8 der Buchstabe a nachgestellt.

Figur 8 zeigt einen Handwerkzeugkoffer 10a, der zu einem Transport und/oder zu einer Lagerung von einem in dem Handwerkzeugkoffer 10a angeordneten Transportgegenstand 20a vorgesehen ist. Der Handwerkzeugkoffer 10a umfasst eine Grundeinheit 12a, die als eine Bodeneinheit ausgebildet ist. Die Grundeinheit 12a ist in Form eines offenen Quaders ausgebildet und weist eine Bodenwand und vier im Wesentlichen senkrecht zu der Bodenwand angeordnete Seitenwände 14a auf. Der Handwerkzeugkoffer 10a umfasst ferner eine Deckeleinheit 16a, die dazu vorgesehen ist, mit der Grundeinheit 12a einen Kofferinnenraum zu einer Lagerung und/oder zu einem Transport des Transportgegenstands 20a unmittelbar zu begrenzen. Eine der Seitenwände 14a ist dazu vorgesehen, einen Lagerbereich des Transportgegenstands 20a in einer Ladeposition für einen elektrischen Ladevorgang des Transportgegenstands 20a zu begrenzen.

Der Handwerkzeugkoffer 10a umfasst eine Positioniereinheit 30a, die dazu vorgesehen ist, den Transportgegenstand 20a an die Seitenwand 14a anzunähern und/oder relativ zu der Seitenwand 14a auszurichten. Die Positioniereinheit 30a umfasst ein Positioniermittel 52a, das dazu vorgesehen ist mit dem Transportgegenstand 20a zu einer Positionierung zusammenzuwirken und/oder den Transportgegenstand in der Ladeposition zu halten. Das Positioniermittel 52a bildet mit der Seitenwand 14a zwei Aufnahmen für je ein Halteelement des Transportgegenstands 20a aus. Die Aufnahme weist einen trapezförmigen Querschnitt auf. Die Aufnahme ist prismenförmig ausgebildet. Die Aufnahme verbreitert sich in einer Richtung parallel zur Seitenwand 14a von einer Bodenwand zu der Deckeleinheit 16a. Die Halteelemente sind in Form einer Verbreiterung des Transportgegenstands 20a ausgebildet. Die Halteelemente sind als zwei einander gegenüberliegende Auswölbungen ausgebildet. Eine Form der Auswölbungen entspricht jeweils einer Form der Aufnahmen. Das Positioniermittel weist eine Wirkfläche auf, die als eine Schrägfläche, bezogen auf die Seitenwand 14a, ausgebildet ist. Das Positioniermittel 52a bildet zusammen mit dem Transportgegenstand 20a einen Keiltrieb aus und ist dazu vorgesehen, den Transportgegenstand 20a zumindest bei einer Einsetzbewegung an die Seitenwand 14a anzunähern und/oder relativ zu der Seitenwand 14a auszurichten.

## Patentansprüche

1. Handwerkzeugkoffer (10) mit zumindest einer Grundeinheit (12), die zumindest eine Seitenwand (14, 14a) umfasst, und mit zumindest einer Deckeleinheit (16), die dazu vorgesehen ist, mit der Grundeinheit (12) einen Kofferinnenraum (18) zu einer Lagerung und/oder zu einem Transport von zumindest einem Transportgegenstand (20, 22, 24, 26, 28) mittelbar oder unmittelbar zu begrenzen, mit einer Positioniereinheit (30), die zu einer drahtlosen Energieübertragung in den Transportgegenstand (20, 22, 24, 26, 28) in zumindest einem Betriebszustand eine Klemmkraft auf den zumindest einen Transportgegenstand (20, 22, 24, 26, 28) erzeugt, die zumindest eine wesentliche Komponente in Richtung der Seitenwand (14, 14a) derart aufweist, dass sie den zumindest einen Transportgegenstand (20, 22, 24, 26, 28) in Richtung der Seitenwand (14, 14a) in eine vorbestimmte Ladeposition annähert und/oder relativ zu der Seitenwand (14, 14a) ausrichtet, in welcher der Transportgegenstand (20, 22, 24, 26, 28) besonders effizient Energie aufnehmen kann, **dadurch gekennzeichnet, dass** die Positioniereinheit (30) in zumindest einem Betriebszustand bei einer Schließbewegung zwischen der Grundeinheit (12) und der Deckeleinheit (16) eine Schließkraft in die Klemmkraft übersetzt.

2. Handwerkzeugkoffer (10) nach Anspruch 1, **dadurch gekennzeichnet, dass** die Positioniereinheit (30) zumindest eine Wirkfläche (32, 34) aufweist, die dazu vorgesehen ist, mit einer korrespondierenden Wirkfläche (38, 40) des zumindest einen Transportgegenstands (20, 22, 24, 26) zusammenzuwirken und die eine Flächennormale mit einer Komponente in Richtung der Seitenwand (14, 14a) aufweist.

3. Handwerkzeugkoffer (10) nach Anspruch 2, **dadurch gekennzeichnet, dass** die zumindest eine Wirkfläche (32, 34) als eine Schrägfläche ausgebildet ist.

4. Handwerkzeugkoffer (10) nach einem der vorhergehenden Ansprüche, **gekennzeichnet durch** eine Lagereinheit (46), die eine Schwenkachse (48) aufweist, um welche sie die Deckeleinheit (16) und die Grundeinheit (12) für die Schließbewegung schwenkbar gegeneinander lagert.

5. Handwerkzeugkoffer (10) nach Anspruch 4, **dadurch gekennzeichnet, dass** die Klemmkraft eine wesentliche, in radialer Richtung zu der Schwenkachse (48) ausgerichtete Komponente aufweist.

6. Handwerkzeugkoffer (10) nach einem der vorhergehenden Ansprüche, **dadurch gekennzeichnet, dass** die Positioniereinheit (30) zumindest ein Positioniermittel (50) aufweist, das in einem montierten Zustand an die Deckeleinheit (16) angebunden ist.

7. Handwerkzeugkoffer (10) nach Anspruch 6, **dadurch gekennzeichnet, dass** das zumindest eine Positioniermittel (50) zumindest eine Aussparung (54) zur Aufnahme eines Gegenstands (56) aufweist.

8. Handwerkzeugkoffer (10) nach einem der vorhergehenden Ansprüche 6 oder 7, **dadurch gekennzeichnet, dass** das zumindest eine Positioniermittel (50) als eine Leiste ausgebildet ist.

9. Handwerkzeugkoffer (10) nach einem der vorhergehenden Ansprüche, **dadurch gekennzeichnet, dass** die Positioniereinheit (30) zumindest ein Positioniermittel (52) aufweist, das in einem montierten Zustand an die Grundeinheit (12) angebunden ist.

10. Handwerkzeugkoffer (10) nach einem der vorhergehenden Ansprüche, **dadurch gekennzeichnet, dass** die Positioniereinheit (30) zumindest ein Anzeigemittel (58, 60, 62) aufweist, das dazu vorgesehen ist, einem Benutzer eine vorbestimmte Lagerposition des zumindest einen Transportgegenstands (20, 22, 24, 26, 28) anzuzeigen.

11. Handwerkzeugkoffer (10) nach einem der vorhergehenden Ansprüche, **gekennzeichnet durch** eine zumindest teilweise einstellbare Koffereinlage (64), die zu einer Lagerung einer Handwerkzeugmaschine (66) vorgesehen ist.

12. System mit einem Handwerkzeugkoffer (10) nach einem der Ansprüche 1 bis 11 und mit zumindest einem Transportgegenstand (20, 22, 24, 26, 28), der zu einer Lagerung und/oder zu einem Transport in dem Handwerkzeugkoffer (10) vorgesehen ist.

13. System nach Anspruch 12, **dadurch gekennzeichnet, dass** der zumindest eine Transportgegenstand (20, 22, 24, 26) als eine Akkuvorrichtung (70, 72, 74, 76) zu einer Energieversorgung einer Handwerkzeugmaschine (66) ausgebildet ist.

14. System nach Anspruch 13, **dadurch gekennzeichnet, dass die** Handwerkzeugmaschine (66) dazu vorgesehen ist, zumindest mechanisch an die Akkuvorrichtung (70, 72, 74, 76) gekoppelt in dem Handwerkzeugkoffer (10) transportiert und/oder gelagert zu werden.

## Claims

1. Hand-tool case (10) having at least one base unit (12) which comprises at least one side wall (14, 14a), and having at least one cover unit (16) which is intended to directly or indirectly define with the base unit (12) a case interior (18) for storing and/or transporting at least one item to be transported (20, 22, 24, 26, 28), having a positioning unit (30) which, for wireless energy transfer into the item to be transported (20, 22, 24, 26, 28), generates in at least one operating state a clamping force on the at least one item to be transported (20, 22, 24, 26, 28), said clamping force having at least one major component in the direction of the side wall (14, 14a) such that it moves the at least one item to be transported (20, 22, 24, 26, 28) in the direction of the side wall (14, 14a) into a predetermined loading position and/or orients it relative to the side wall (14, 14a), in which the item to be transported (20, 22, 24, 26, 28) can pick up energy particularly efficiently, **characterized in that** the positioning unit (30), in at least one operating state, converts a closing force into the clamping force during a closing movement between the base unit (12) and the cover unit (16).

2. Hand-tool case (10) according to Claim 1, **characterized in that** the positioning unit (30) has at least one active surface (32, 34) which is intended to cooperate with a corresponding active surface (38, 40) of the at least one item to be transported (20, 22, 24, 26) and which has a surface normal with a component in the direction of the side wall (14, 14a).

3. Hand-tool case (10) according to Claim 2, **characterized in that** the at least one active surface (32, 34) is in the form of an inclined surface.

4. Hand-tool case (10) according to one of the preceding claims, **characterized by** a support unit (46) which has a pivot axis (48) about which it supports the cover unit (16) and the base unit (12) in a pivotable manner with respect to one another for the closing movement.

5. Hand-tool case (10) according to Claim 4, **characterized in that** the clamping force has a major component oriented in a radial direction with respect to the pivot axis (48).

6. Hand-tool case (10) according to one of the preceding claims, **characterized in that** the positioning unit (30) has at least one positioning means (50) which is attached to the cover unit (16) in a mounted state.

7. Hand-tool case (10) according to Claim 6, **characterized in that** the at least one positioning means (50) has at least one cutout (54) for receiving an item (56).

8. Hand-tool case (10) according to either of the preceding Claims 6 and 7, **characterized in that** the at least one positioning means (50) is in the form of a strip.

9. Hand-tool case (10) according to one of the preceding claims, **characterized in that** the positioning unit (30) has at least one positioning means (52) which is attached to the base unit (12) in a mounted state.

10. Hand-tool case (10) according to one of the preceding claims, **characterized in that** the positioning unit (30) has at least one indication means (58, 60, 62) which is intended to indicate to a user a predetermined storage position of the at least one item to be transported (20, 22, 24, 26, 28) .

11. Hand-tool case (10) according to one of the preceding claims, **characterized by** an at least partially settable case inlay (64) which is intended for storing a hand-held power tool (66).

12. System having a hand-tool case (10) according to one of Claims 1 to 11 and having at least one item to be transported (20, 22, 24, 26, 28) which is intended to be stored and/or transported in the hand-tool case (10).

13. System according to Claim 12, **characterized in that** the at least one item to be transported (20, 22, 24, 26) is configured as a battery device (70, 72, 74, 76) for supplying a hand-held power tool (66) with energy.

14. System according to Claim 13, **characterized in that** the hand-held power tool (66) is intended to be transported and/or stored in the hand-tool case (10) in a manner at least mechanically coupled to the battery device (70, 72, 74, 76).

## Revendications

1. Coffret d'outil à main (10) comprenant au moins une unité de base (12), qui comprend au moins une paroi latérale (14, 14a), et au moins une unité formant couvercle (16), qui est prévue pour délimiter directement ou indirectement avec l'unité de base (12) un espace de coffret intérieur (18) destiné à loger et/ou transporter au moins un objet à transporter (20, 22, 24, 26, 28), une unité de positionnement (30) qui, pour transmettre de l'énergie sans fil dans l'objet à transporter (20, 22, 24, 26, 28) dans au moins un état de fonctionnement, génère sur l'au moins un objet à transporter (20, 22, 24, 26, 28) une force de serrage qui comporte au moins une composante importante en direction de la paroi latérale (14, 14a) de manière à approcher au moins un objet à transporter (20, 22, 24, 26, 28), et/ou l'orienter par rapport à la paroi latérale (14, 14a), en direction de la paroi latérale (14, 14a) jusque dans une position de charge prédéterminée dans laquelle l'objet à transporter (20, 22, 24, 26, 28) peut absorber de l'énergie de manière particulièrement efficace, **caractérisé en ce que** l'unité de positionnement (30) convertit une force de fermeture en force de serrage dans au moins un état de fonctionnement lors d'un mouvement de fermeture entre l'unité de base (12) et l'unité formant couvercle (16).

2. Coffret d'outil à main (10) selon la revendication 1, **caractérisé en ce que** l'unité de positionnement (30) comporte au moins une surface active (32, 34) qui est prévue pour coopérer avec une surface active correspondante (38, 40) de l'au moins un objet à transporter (20, 22, 24, 26) et qui comporte une normale de surface avec une composante en direction de la paroi latérale (14, 14a).

3. Coffret d'outil à main (10) selon la revendication 2, **caractérisé en ce que** l'au moins une surface active (32, 34) est réalisée sous la forme d'une surface inclinée.

4. coffret d'outil à main (10) selon l'une des revendications précédentes, **caractérisé par** une unité de palier (46) qui comporte un axe de pivotement (48) sur lequel l'unité formant couvercle (16) et l'unité de base (12) sont montées de manière pivotante l'une par rapport à l'autre pour effectuer le mouvement de fermeture.

5. Coffret d'outil à main (10) selon la revendication 4, **caractérisé en ce que** la force de serrage comporte une composante importante orientée dans une direction radiale à l'axe de pivotement (48).

6. Coffret d'outil à main (10) selon l'une des revendications précédentes, **caractérisé en ce que** l'unité de positionnement (30) comporte au moins un moyen de positionnement (50) qui est relié, à l'état assemblé, à l'unité formant couvercle (16).

7. Coffret d'outil à main (10) selon la revendication 6, **caractérisé en ce que** l'au moins un moyen de positionnement (50) comporte au moins un évidement (54) destiné à recevoir un objet (56).

8. Coffret d'outil à main (10) selon l'une des revendications précédentes 6 ou 7, **caractérisé en ce que** l'au moins un moyen de positionnement (50) est réalisé sous la forme d'une barre.

9. Coffret d'outil à main (10) selon l'une des revendications précédentes, **caractérisé en ce que** l'unité de positionnement (30) comporte au moins un moyen de positionnement (52) qui est relié, à l'état assemblé, à l'unité de base (12).

10. Coffret d'outil à main (10) selon l'une des revendications précédentes, **caractérisé en ce que** l'unité de positionnement (30) comporte au moins un moyen de présentation (58, 60, 62) qui est prévu pour présenter à un utilisateur une position de montage prédéterminée de l'au moins un objet à transporter (20, 22, 24, 26, 28).

11. Coffret d'outil à main (10) selon l'une des revendications précédentes, **caractérisé par** un insert de coffret (64) au moins partiellement réglable qui est prévu pour monter une machine-outil à main (66).

12. Système comprenant un coffret d'outil à main (10) selon l'une des revendications 1 à 11 et au moins un objet à transporter (20, 22, 24, 26, 28) qui est prévu pour être logé et/ou transporté dans le coffret d'outil à main (10).

13. Système selon la revendication 12, **caractérisé en ce que** l'au moins un objet à transporter (20, 22, 24, 26) est conçu comme un dispositif de batterie (70, 72, 74, 76) destiné à alimenter une machine-outil à main (66) en énergie.

14. Système selon la revendication 13, **caractérisé en ce que** la machine-outil à main (66) est prévue pour être transportée et/ou logée dans le coffret d'outil à main (10) en étant au moins accouplée mécaniquement au dispositif de batterie (70, 72, 74, 76).
